(19) **Europäisches Patentamt**
**European Patent Office**
**Office européen des brevets**

(11) **EP 3 506 700 B1**

(12) **EUROPEAN PATENT SPECIFICATION**

(45) Date of publication and mention
of the grant of the patent:
**04.11.2020 Bulletin 2020/45**

(21) Application number: **17854961.4**

(22) Date of filing: **28.09.2017**

(51) Int Cl.:
***H04W 72/04*** (2009.01)

(86) International application number:
**PCT/CN2017/104075**

(87) International publication number:
**WO 2018/059511 (05.04.2018 Gazette 2018/14)**

(54) **DOWNLINK RESOURCE SCHEDULING METHOD, TERMINAL DEVICE, AND NETWORK DEVICE**

DOWNLINK-RESSOURCEN-PLANUNGSVERFAHREN, ENDGERÄTEVORRICHTUNG UND
NETZWERKVORRICHTUNG

PROCÉDÉ DE PLANIFICATION DE RESSOURCES DE LIAISON DESCENDANTE, DISPOSITIF
TERMINAL ET DISPOSITIF RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2016 CN 201610878968
07.12.2016 CN 201611118002**

(43) Date of publication of application:
**03.07.2019 Bulletin 2019/27**

(73) Proprietor: **Huawei Technologies Co., Ltd.
Longgang District
Shenzhen, Guangdong 518129 (CN)**

(72) Inventors:
• **LYU, Yongxia
Shenzhen
Guangdong 518129 (CN)**

• **GUAN, Lei
Shenzhen
Guangdong 518129 (CN)**
• **MA, Sha
Shenzhen
Guangdong 518129 (CN)**
• **MA, Ruixiang
Shenzhen
Guangdong 518129 (CN)**

(74) Representative: **Goddar, Heinz J.
Boehmert & Boehmert
Anwaltspartnerschaft mbB
Pettenkoferstrasse 22
80336 München (DE)**

(56) References cited:
**WO-A1-2016/019553      CN-A- 103 517 420
CN-A- 103 796 327      CN-A- 104 981 015
US-A1- 2016 234 857**

## Description

## TECHNICAL FIELD

The present invention relates to the communications field, and more specifically, to a downlink resource scheduling method, a terminal device, and a network device.

## BACKGROUND

Currently, based on a requirement of the International Telecommunication Union (International Telecommunication Union, ITU for short) for a future communications system, an air interface in the future communications system needs to support various services such as an Enhanced Mobile Broadband (Enhanced Mobile Broadband, eMBB for short) service, an ultra-reliable and low latency communications (Ultra-reliable Low Latency Communication, URLLC for short) service, and a massive machine type communications (Massive machine-type communication, Massive MTC for short) service.

The foregoing different services impose different requirements on the communications system, and some services have a relatively high requirement on a latency but some services have a relatively low requirement on a latency. In the prior art, in a Long Term Evolution (long term evolution, LTE) communications system, a network device may send a downlink control channel to a terminal device, to schedule the terminal device to send an uplink message of a current service of the terminal device or receive a downlink message of the current service of the terminal device on a time-frequency resource indicated by the downlink control channel.

Therefore, a solution for flexible resource scheduling is urgently required to meet requirements of different services.

US 2016/234857 A1 discloses devices for wireless communication. A receiving device may detect a signal associated with low latency transmissions and decode a non-low latency communication accordingly. The receiving device may receive an indicator from a transmitting device that indicates where and when low latency communications occur. The receiving device may use the indicator to mitigate low latency interference, generate channel estimates, and reliably decode the non-low latency communication.

## SUMMARY

The present invention provides downlink resource scheduling methods of claims 1 and 11, a terminal device of claim 12, a network device of claim 13, and a readable storage medium of claim 14, to improve resource allocation flexibility. Possible implementation manners are disclosed in the dependent claims.

According to a first aspect, a downlink resource scheduling method is provided, and the method includes: receiving, by a terminal device, first pre-scheduling indication information sent by a network device, where the first pre-scheduling indication information is used to instruct the terminal device to receive a first downlink data channel; receiving, by the terminal device according to the first pre-scheduling indication information, a downlink signal sent by the network device, where the downlink signal sent by the network device includes the first downlink data channel; and detecting, by the terminal device, at least one piece of post-scheduling indication information in the downlink signal sent by the network device, where the at least one piece of post-scheduling indication information is used by the terminal device to determine a resource occupied by the first downlink data channel in the received downlink signal; wherein the at least one piece of post-scheduling indication information includes first post-scheduling indication information corresponding to the first pre-scheduling indication information, the first post-scheduling indication information is used to indicate a time domain resource occupied, in a first time period, by the first downlink data channel in the downlink signal received by the terminal device, the first time period is a time period from a moment at which the terminal device receives the downlink signal sent by the network device to a moment at which the terminal device successfully detects the first post-scheduling indication information, and the first post-scheduling indication information is further used to indicate that transmission of the first downlink data channel is completed.

In the method in this embodiment of the present invention, the at least one piece of post-scheduling indication information is located after the first pre-scheduling indication information, and the first pre-scheduling indication information does not need to indicate an end location of a time domain resource, so that the network device can flexibly allocate a resource as required, to improve resource allocation flexibility. This solution has relatively high compatibility and expansibility.

In this embodiment of the present invention, the resource may be a time domain resource or a frequency domain resource, or the resource may be a time domain resource and a frequency domain resource.

Optionally, in a possible implementation of the first aspect, the first pre-scheduling indication information is carried on a physical control channel, and the at least one piece of post-scheduling indication information is carried on a physical control channel.

Optionally, in a possible implementation of the first aspect, the first pre-scheduling indication information includes a physical downlink control channel PDCCH.

Optionally, in a possible implementation of the first aspect, before the receiving, by a terminal device, first pre-scheduling indication information sent by a network device, the method further includes: detecting, by the terminal device, pre-scheduling indication information.

Optionally, in a possible implementation of the first aspect, the detecting, by the terminal device, pre-scheduling indication information includes: periodically detecting, by the terminal device, the pre-scheduling indication information.

Optionally, in a possible implementation of the first aspect, the first pre-scheduling indication information includes at least one of the following information: a start location of a time domain resource allocated by the network device to the first downlink data channel of the terminal device, a frequency domain location allocated by the network device to the first downlink data channel, a detection period for detecting the at least one piece of post-scheduling indication information by the terminal device, and a size of the time domain resource allocated by the network device to the first downlink data channel.

In the method in this embodiment of the present invention, the time domain resource allocated by the network device to the first downlink data channel may not be continuous, so that flexibility of allocating a time domain resource by the network device can be improved. In addition, the first post-scheduling indication information indicates that transmission of the first downlink data channel is completed (or indicates an end location of the time domain resource of the first downlink data channel) and the time domain resource occupied by the first downlink data channel. This method is highly flexible in operation, and has relatively high compatibility and expansibility.

Optionally, in a possible implementation of the first aspect, the first post-scheduling indication information includes an end identifier that is used to indicate that transmission of the first downlink data channel is completed.

Optionally, in a possible implementation of the first aspect, the first post-scheduling indication information and the first pre-scheduling indication information include a same or corresponding identifier.

Optionally, in a possible implementation of the first aspect, the first post-scheduling indication information and the first pre-scheduling indication information include a same transmission process ID, or the first post-scheduling indication information and the first pre-scheduling indication information are scrambled by using a same scrambling code.

In a possible implementation of the first aspect, the first post-scheduling indication information includes N pieces of occupation indication information, the N pieces of occupation indication information are in a one-to-one correspondence with N time domain units occupied by the downlink signal received by the terminal device, and each piece of occupation indication information is used to indicate whether a corresponding time domain unit is used to transmit the first downlink data channel.

In the method in this embodiment of the present invention, the first post-scheduling indication information includes the N pieces of occupation indication information that are in a one-to-one correspondence with the N time domain units, so that the terminal device can determine, according to each piece of occupation indication information, whether the corresponding time domain unit is used to transmit the first downlink data channel.

In a possible implementation of the first aspect, the first pre-scheduling indication information is further used to indicate a start detection location at which the terminal device detects the first post-scheduling indication information.

In the method in this embodiment of the present invention, the terminal may detect the first post-scheduling indication information at the start detection location according to the indication of the first pre-scheduling indication information, so that a quantity of times of detecting the first post-scheduling indication information by the terminal device can be reduced, and detection efficiency can be improved.

In a possible implementation of the first aspect, a $j^{th}$ piece of post-scheduling indication information in the at least one piece of post-scheduling indication information is located at a preset location of a $(j+1)^{th}$ time domain scheduling unit occupied by the downlink signal received by the terminal device, and the $j^{th}$ piece of post-scheduling indication information is used by the terminal device to determine a time domain resource occupied, in a $j^{th}$ time domain scheduling unit, by the first downlink data channel in the received downlink signal, where $j \geq 1$.

In the method in this embodiment of the present invention, post-scheduling indication information in each time domain scheduling unit is used by the terminal device to determine a time domain unit occupied by the first downlink data channel in a previous time domain scheduling unit of the time domain scheduling unit. The terminal device may obtain corresponding post-scheduling indication information at a preset location of each time domain scheduling unit, so that accuracy of obtaining post-scheduling indication information by the terminal device can be improved.

Optionally, in a possible implementation of the first aspect, the $j^{th}$ piece of post-scheduling indication information is carried on a downlink control channel PDCCH in the $(j+1)^{th}$ time domain scheduling unit.

In the method in this embodiment of the present invention, the PDCCH in the $(j+1)^{th}$ time domain scheduling unit carries post-scheduling indication information corresponding to the $j^{th}$ time domain scheduling unit, so that operability of this solution is high.

In a possible implementation of the first aspect, the at least one piece of post-scheduling indication information includes first post-scheduling indication information corresponding to the first pre-scheduling indication information, the first post-scheduling indication information is used to indicate that transmission of the first downlink data channel is completed, and the first post-scheduling indication information is a last piece of post-scheduling indication information in the at least one piece of post-scheduling indication information.

In the method in this embodiment of the present invention, the first post-scheduling indication information indicates an end location of the time domain resource of the first downlink data channel, so that flexibility of allocating a time domain resource by the network device can be improved. In addition, a time domain resource occupation status of each time domain scheduling unit is indicated by corresponding post-scheduling indication information, so that the terminal device can efficiently determine a time domain unit used to transmit the first downlink data channel.

Optionally, in a possible implementation of the first aspect, the $j^{th}$ piece of post-scheduling indication information is used to indicate the time domain resource occupied, in the $j^{th}$ time domain scheduling unit, by the first downlink data channel in the received downlink signal.

In the method in this embodiment of the present invention, the $j^{th}$ piece of post-scheduling indication information directly indicates the time-frequency resource occupied by the first downlink data channel in the $j^{th}$ time domain scheduling unit, so that the terminal device can directly determine a time domain resource occupation status of the $j^{th}$ time domain scheduling unit according to the $j^{th}$ piece of post-scheduling indication information.

In a possible implementation of the first aspect, the first pre-scheduling indication information is used to indicate the size of the time domain resource allocated by the network device to the first downlink data channel, and the method further includes: determining, by the terminal device based on the time domain resource size indicated by the first pre-scheduling indication information and a size of a time domain resource that is occupied by the first downlink data channel and that is determined by the terminal device according to the at least one piece of post-scheduling indication information, whether transmission of the first downlink data channel is completed; and when the terminal device determines that transmission of the first downlink data channel is not completed, continuing, by the terminal device, detecting post-scheduling indication information.

In the method in this embodiment of the present invention, each time the terminal device successfully detects one piece of post-scheduling indication information, the terminal device may determine a time domain resource occupied by the first downlink data channel in a previous time domain scheduling unit, so that the terminal device efficiently obtains the first downlink data channel.

Optionally, in a possible implementation of the first aspect, the last piece of post-scheduling indication information in the at least one piece of post-scheduling indication information is the first post-scheduling indication information, and the method further includes: determining, by the terminal device according to post-scheduling indication information before the first post-scheduling indication information, that transmission of the first downlink data channel is not completed, and determining, by the terminal device according to the at least one piece of post-scheduling indication information, that transmission of the first downlink data channel is completed.

Optionally, in a possible implementation of the first aspect, the $j^{th}$ piece of post-scheduling indication information is used to indicate a time domain unit that is reallocated in the $j^{th}$ time domain scheduling unit. In other words, the $j^{th}$ piece of post-scheduling indication information is used to indicate a time domain resource that is not occupied, in the $j^{th}$ time domain scheduling unit, by the first downlink data channel in the received downlink signal.

In the method in this embodiment of the present invention, the $j^{th}$ piece of post-scheduling indication information indicates a time domain resource that is reallocated in the $j^{th}$ time domain scheduling unit, so that the terminal device can determine, according to the $j^{th}$ piece of post-scheduling indication information, that a resource that is not reallocated in the $j^{th}$ time domain scheduling unit is used to transmit the first downlink data channel. This indication manner is simple and easy to implement.

In a possible implementation of the first aspect, the $j^{th}$ piece of post-scheduling indication information includes M pieces of occupation indication information, the M pieces of occupation indication information are in a one-to-one correspondence with M time domain units included in the $j^{th}$ time domain scheduling unit, and each piece of occupation indication information is used by the terminal device to determine whether a corresponding time domain unit is used to transmit the first downlink data channel.

In the method in this embodiment of the present invention, the terminal device determines, by using M pieces of occupation indication information included in each piece of post-scheduling indication information, a time domain resource occupied by the first downlink data channel in a corresponding time domain scheduling unit. This method can improve efficiency of obtaining the first downlink data channel by the terminal device.

Optionally, in a possible implementation of the first aspect, a $j^{th}$ piece of post-scheduling indication information in the at least one piece of post-scheduling indication information is located at a preset location of a $j^{th}$ time domain scheduling unit occupied by the downlink signal received by the terminal device, and the $j^{th}$ piece of post-scheduling indication information is used by the terminal device to determine a time domain resource occupied, in the $j^{th}$ time domain scheduling unit, by the downlink data channel in the received downlink signal, where $j \geq 1$.

In the method in this embodiment of the present invention, the terminal device may determine, according to post-scheduling indication information transmitted by using the $j^{th}$ time domain scheduling unit, the time domain resource occupied by the first downlink data channel in the $j^{th}$ time domain scheduling unit, so that the terminal device efficiently determines, according to post-scheduling indication information in each time domain scheduling unit, a time domain resource occupied by the first downlink data channel in each time domain scheduling unit.

In a possible implementation of the first aspect, the method further includes: detecting, by the terminal device, second pre-scheduling indication information in the downlink signal sent by the network device, where the second pre-scheduling indication information is used to instruct the terminal device to receive a second downlink data channel. The second pre-scheduling indication information is located after the first post-scheduling indication information in time domain.

In the method in this embodiment of the present invention, the terminal device simultaneously detects the at least one piece of post-scheduling indication information and the second pre-scheduling indication information (new pre-scheduling indication information), so that the terminal device receives the second downlink data channel (a new second downlink data channel) or determines whether detection on post-scheduling indication information is missed.

In a possible implementation of the first aspect, post-scheduling indication information that is in the at least one piece of post-scheduling indication information and that is used by the terminal device to determine that transmission of the downlink data is completed is used to instruct the terminal device to send a hybrid automatic repeat request HARQ time domain resource.

In this embodiment of the present invention, because the network device dynamically allocates a time domain resource to the first downlink data channel, if a time domain resource for a HARQ feedback is indicated by using pre-scheduling indication information, the terminal device may need to perform a HARQ feedback before receiving the at least one piece of post-scheduling indication information. Therefore, a HARQ feedback is indicated by using post-scheduling indication information that is used by the terminal device to determine that transmission of downlink data is completed, to improve HARQ feedback accuracy.

Optionally, in a possible implementation of the first aspect, the post-scheduling indication information that is used by the terminal device to determine that transmission of the downlink data is completed includes the first post-scheduling indication information in the possible implementations of the first aspect.

According to a second aspect, a downlink resource scheduling method is provided, and the method includes: sending, by a network device, the first pre-scheduling indication information to a terminal device, where the first pre-scheduling indication information is used to instruct the terminal device to receive a first downlink data channel; and sending, by the network device, a downlink signal to the terminal device, where the downlink signal includes the first downlink data channel and at least one piece of post-scheduling indication information, and the at least one piece of post-scheduling indication information is used by the terminal device to determine a resource occupied by the first downlink data channel in the received downlink signal; where the at least one piece of post-scheduling indication information includes first post-scheduling indication information corresponding to the first pre-scheduling indication information, the first post-scheduling indication information is used to indicate a time domain resource occupied, in a first time period, by the first downlink data channel in the downlink signal sent by the network device, the first time period is a time period from a moment at which the network device sends the downlink signal to a moment at which the network device sends the first post-scheduling indication information, and the first post-scheduling indication information is further used to indicate that transmission of the first downlink data channel is completed.

In the method in this embodiment of the present invention, the network device can flexibly allocate a time domain resource as required, to improve resource allocation flexibility. This solution has relatively high compatibility and expansibility.

Optionally, in a possible implementation of the second aspect, the first pre-scheduling indication information is carried on a physical control channel, and the at least one piece of post-scheduling indication information is carried on a physical control channel.

Optionally, in a possible implementation of the second aspect, the first pre-scheduling indication information includes physical layer signaling.

Optionally, in a possible implementation of the second aspect, the first pre-scheduling indication information includes a physical downlink control channel PDCCH.

Optionally, in a possible implementation of the second aspect, the first pre-scheduling indication information includes at least one of the following information: a start location of a time domain resource allocated by the network device to the first downlink data channel of the terminal device, a frequency domain location allocated by the network device to the first downlink data channel, a detection period for detecting the at least one piece of post-scheduling indication information by the terminal device, and a size of the time domain resource allocated by the network device to the first downlink data channel.

In the method in this embodiment of the present invention, the time domain resource allocated by the network device to the first downlink data channel may not be continuous, so that flexibility of allocating a time domain resource by the network device can be improved.

Optionally, in a possible implementation of the second aspect, the first post-scheduling indication information includes an end identifier that is used to indicate that transmission of the first downlink data channel is completed.

Optionally, in a possible implementation of the second aspect, the first post-scheduling indication information and the first pre-scheduling indication information include a same or corresponding identifier.

Optionally, in a possible implementation of the second aspect, the first post-scheduling indication information and the first pre-scheduling indication information include a same transmission process ID, or the first post-scheduling indication information and the first pre-scheduling indication information are scrambled by using a same scrambling code.

In a possible implementation of the second aspect, the first post-scheduling indication information includes N pieces of occupation indication information, the N pieces of occupation indication information are in a one-to-one correspondence with N time domain units occupied by the downlink signal sent by the network device, and each piece of occupation indication information is used to indicate whether a corresponding time domain unit is used to transmit the first downlink data channel.

In the method in this embodiment of the present invention, the first post-scheduling indication information includes the N pieces of occupation indication information that are in a one-to-one correspondence with the N time domain units, so that the terminal device can determine, according to each piece of occupation indication information, whether the corresponding time domain unit is used to transmit the first downlink data channel.

In a possible implementation of the second aspect, the first pre-scheduling indication information is further used to indicate a start detection location at which the terminal device detects the first post-scheduling indication information.

In a possible implementation of the second aspect, a j$^{th}$ piece of post-scheduling indication information in the at least one piece of post-scheduling indication information is located at a preset location of a (j+1)$^{th}$ time domain scheduling unit occupied by the downlink signal received by the terminal device, and the j$^{th}$ piece of post-scheduling indication information is used by the terminal device to determine a time domain resource occupied, in a j$^{th}$ time domain scheduling unit, by the first downlink data channel in the received downlink signal, where j$\geq$1.

In the method in this embodiment of the present invention, post-scheduling indication information in each time domain scheduling unit is used by the terminal device to determine a time domain unit occupied by the first downlink data channel in a previous time domain scheduling unit of the time domain scheduling unit. The terminal device may obtain corresponding post-scheduling indication information at a preset location of each time domain scheduling unit, so that accuracy of obtaining post-scheduling indication information by the terminal device can be improved.

Optionally, in a possible implementation of the second aspect, the j$^{th}$ piece of post-scheduling indication information is carried on a downlink control channel PDCCH in the (j+1)$^{th}$ time domain scheduling unit.

In the method in this embodiment of the present invention, the PDCCH in the (j+1)$^{th}$ time domain scheduling unit carries post-scheduling indication information corresponding to the j$^{th}$ time domain scheduling unit, so that operability of this solution is high.

In a possible implementation of the second aspect, the at least one piece of post-scheduling indication information includes first post-scheduling indication information corresponding to the first pre-scheduling indication information, the first post-scheduling indication information is used to indicate that transmission of the first downlink data channel is completed, and the first post-scheduling indication information is a last piece of post-scheduling indication information in the at least one piece of post-scheduling indication information.

In the method in this embodiment of the present invention, the first post-scheduling indication information indicates an end location of the time domain resource of the first downlink data channel, so that flexibility of allocating a time domain resource by the network device can be improved.

Optionally, in a possible implementation of the second aspect, the j$^{th}$ piece of post-scheduling indication information is used to indicate the time domain resource occupied, in the j$^{th}$ time domain scheduling unit, by the first downlink data channel in the received downlink signal.

In the method in this embodiment of the present invention, the j$^{th}$ piece of post-scheduling indication information directly indicates the time-frequency resource occupied by the first downlink data channel in the j$^{th}$ time domain scheduling unit, so that the terminal device can directly determine a time domain resource occupation status of the j$^{th}$ time domain scheduling unit according to the j$^{th}$ piece of post-scheduling indication information.

In a possible implementation of the second aspect, the first pre-scheduling indication information is used to indicate the size of the time domain resource allocated by the network device to the first downlink data channel, so that the terminal device determines, based on the time domain resource size indicated by the first pre-scheduling indication information and a size of a time domain resource that is occupied by the first downlink data channel and that is determined by the terminal device according to the at least one piece of post-scheduling indication information, whether transmission of the first downlink data channel is completed.

In the method in this embodiment of the present invention, the network device may notify, by using the first pre-scheduling indication information, the terminal device of the size of the time domain resource allocated to the terminal device, so that the terminal device can determine, based on the time domain resource size indicated by the first pre-scheduling indication information and the size of the time domain resource indicated by the at least one piece of post-scheduling indication information, whether transmission of the first downlink data channel is completed.

Optionally, in a possible implementation of the second aspect, the j$^{th}$ piece of post-scheduling indication information is used to indicate a time domain unit that is reallocated in the j$^{th}$ time domain scheduling unit. In other words, the j$^{th}$ piece of post-scheduling indication information is used to indicate a time domain resource that is not occupied, in the j$^{th}$ time domain scheduling unit, by the first downlink data channel in the received downlink signal.

In the method in this embodiment of the present invention, the $j^{th}$ piece of post-scheduling indication information indicates a time domain resource that is reallocated in the $j^{th}$ time domain scheduling unit, so that the terminal device can determine, according to the $j^{th}$ piece of post-scheduling indication information, that a resource that is not reallocated in the $j^{th}$ time domain scheduling unit is used to transmit the first downlink data channel. This indication manner is simple and easy to implement.

In a possible implementation of the second aspect, the $j^{th}$ piece of post-scheduling indication information includes M pieces of occupation indication information, the M pieces of occupation indication information are in a one-to-one correspondence with M time domain units included in the $j^{th}$ time domain scheduling unit, and each piece of occupation indication information is used by the terminal device to determine whether a corresponding time domain unit is used to transmit the first downlink data channel.

In the method in this embodiment of the present invention, efficiency of obtaining the first downlink data channel by the terminal device can be improved.

Optionally, in a possible implementation of the second aspect, a $j^{th}$ piece of post-scheduling indication information in the at least one piece of post-scheduling indication information is located at a preset location of a $j^{th}$ time domain scheduling unit occupied by the downlink signal sent by the network device, and the $j^{th}$ piece of post-scheduling indication information is used by the terminal device to determine a time domain resource occupied, in the $j^{th}$ time domain scheduling unit, by the downlink data channel in the received downlink signal, where $j \geq 1$.

In the method in this embodiment of the present invention, the terminal device may determine, according to post-scheduling indication information transmitted by using the $j^{th}$ time domain scheduling unit, the time domain resource occupied by the first downlink data channel in the $j^{th}$ time domain scheduling unit, so that the terminal device efficiently determines, according to post-scheduling indication information in each time domain scheduling unit, a time domain resource occupied by the first downlink data channel in each time domain scheduling unit.

In a possible implementation of the second aspect, the downlink signal further includes second pre-scheduling indication information, and the second pre-scheduling indication information is used to instruct the terminal device to receive a second downlink data channel.

In a possible implementation of the second aspect, post-scheduling indication information that is in the at least one piece of post-scheduling indication information and that is used by the terminal device to determine that transmission of the downlink data is completed is used to instruct the terminal device to send a hybrid automatic repeat request HARQ time domain resource.

In this embodiment of the present invention, because the network device dynamically allocates a time domain resource to the first downlink data channel, if a time domain resource for a HARQ feedback is indicated by using pre-scheduling indication information, the terminal device may need to perform a HARQ feedback before receiving the at least one piece of post-scheduling indication information. Therefore, a HARQ feedback is indicated by using post-scheduling indication information that is used by the terminal device to determine that transmission of downlink data is completed, to improve HARQ feedback accuracy.

Optionally, in a possible implementation of the second aspect, the post-scheduling indication information that is used by the terminal device to determine that transmission of the downlink data is completed includes the first post-scheduling indication information in the possible implementations of the second aspect.

According to a third aspect, a terminal device is provided. The terminal device is configured to perform the method in the first aspect or any possible implementation of the first aspect. Specifically, the terminal device includes a module for performing the method in the first aspect or any possible implementation of the first aspect.

According to a fourth aspect, a network device is provided. The network device is configured to perform the method in the second aspect or any possible implementation of the second aspect. Specifically, the network device includes a module for performing the method in the second aspect or any possible implementation of the second aspect.

According to a fifth aspect, a terminal device is provided. The terminal device includes a processor, a transceiver, and a memory. Optionally, the terminal device further includes a bus system. The transceiver, the memory, and the processor are connected by using the bus system. The memory is configured to store an instruction. The processor is configured to execute the instruction stored in the memory, to control the transceiver to receive or send a signal, and when the processor executes the instruction stored in the memory, the processor performs the method in the first aspect or any possible implementation of the first aspect.

According to a sixth aspect, a network device is provided. The network device includes a processor, a transceiver, and a memory. Optionally, the network device further includes a bus system. The transceiver, the memory, and the processor are connected by using the bus system. The memory is configured to store an instruction. The processor is configured to execute the instruction stored in the memory, to control the transceiver to receive or send a signal, and when the processor executes the instruction stored in the memory, the processor performs the method in the second aspect or any possible implementation of the second aspect.

According to a seventh aspect, a computer storage medium is provided. The computer storage medium stores program code, and the program code is used to instruct to perform the method in the first aspect or any possible implementation of the first aspect.

According to an eighth aspect, a computer storage medium is provided. The computer storage medium stores program code, and the program code is used to instruct to perform the method in the second aspect or any possible implementation of the second aspect.

Optionally, in the foregoing embodiment, a $j^{th}$ piece of post-scheduling indication information in the at least one piece of post-scheduling indication information is located at a preset location of the $j^{th}$ time domain scheduling unit occupied by the downlink signal received by the terminal device, and the $j^{th}$ piece of post-scheduling indication information is used by the terminal device to determine a time domain resource occupied, in the $j^{th}$ time domain scheduling unit, by the first downlink data channel in the received downlink signal, where $j \geq 1$. That is, post-scheduling indication information in a current time domain scheduling unit is used to indicate a time domain resource occupation status of the current time domain scheduling unit.

Optionally, in the first aspect, the detecting, by the terminal device, at least one piece of post-scheduling indication information in the downlink signal sent by the network device includes: obtaining, by the terminal device, post-scheduling indication information in a first time domain scheduling unit, where the post-scheduling indication information n is used to indicate a resource that is in a second time domain scheduling unit and that is used to send the first downlink data channel, and the first time domain scheduling unit is the same as the second time domain scheduling unit or the first time domain scheduling unit is located after the second time domain scheduling unit.

The first aspect may further include:

determining, by the terminal device, that a size of the resource that is in the second time domain scheduling unit and that is used to transmit the first downlink data channel is less than the size that is of the resource allocated to the first downlink data channel and that is indicated by the first pre-scheduling indication information; and
receiving, by the terminal device by detecting a third time domain scheduling unit, a first downlink data channel that is not sent in the second time domain scheduling unit, where the third time domain scheduling unit is located after the second time domain scheduling unit.

Optionally, in the first aspect, the detecting, by the terminal device, at least one piece of post-scheduling indication information in the downlink signal sent by the network device includes: obtaining, by the terminal device, post-scheduling indication information in a first time domain scheduling unit, where the post-scheduling indication information n is used to indicate a resource that is in a second time domain scheduling unit and that is used to send the first downlink data channel, and the first time domain scheduling unit is the same as the second time domain scheduling unit or the first time domain scheduling unit is located after the second time domain scheduling unit.

The first aspect may further include:

determining, by the terminal device, that a size of the resource that is in the second time domain scheduling unit and that is used to transmit the first downlink data channel is less than the size that is of the resource allocated to the first downlink data channel and that is indicated by the first pre-scheduling indication information; and
receiving, by the terminal device by detecting a third time domain scheduling unit, a first downlink data channel that is not sent in the second time domain scheduling unit, where the third time domain scheduling unit is located after the second time domain scheduling unit.

It should be noted that, if the first time domain scheduling unit is located after the second time domain scheduling unit, the third time domain scheduling unit may be the same as the first time domain scheduling unit.

Optionally, the receiving, by the terminal device by detecting a third time domain scheduling unit, a first downlink data channel that is not sent in the second time domain scheduling unit includes: receiving, by the terminal device, by detecting a first part of resources in the third time domain scheduling unit, the first downlink data channel that is not sent in the second time domain scheduling unit, where the third time domain scheduling unit includes the first part of resources and a second part of resources, and the second part of resources are predefined resources that are not used to transmit data.

Optionally, the resource that is allocated to the first downlink data channel and that is indicated by the first pre-scheduling indication information includes a first frequency domain resource, the first part of resources include a second frequency domain resource, and the second frequency domain resource included in the first part of resources is in a same frequency domain location as the first frequency domain resource.

That is, when detecting the third time domain scheduling unit, the terminal device detects a resource that is in the third time domain scheduling unit and whose frequency domain location is the same as a frequency domain location of the resource that is allocated to the first downlink data channel and that is indicated by the first pre-scheduling indication information.

In this optional implementation, resource sizes are compared to determine whether transmission of the first downlink data channel is completed, and resources at a same frequency domain location are detected. Therefore, the network device does not need to indicate a frequency domain location to the terminal device, to reduce signaling overheads.

It should be noted that, in the foregoing optional implementation, the first downlink data channel that is not sent in the second time domain scheduling unit may be carried on a plurality of time domain scheduling units, and the terminal device may receive, in another time domain scheduling unit in the same manner, another first downlink data channel that is not sent in the second time domain scheduling unit. A difference lies in that when the terminal device determines whether transmission of the first downlink data channel is completed, the terminal device compares sizes of all resources that are in all second time domain scheduling units and that are used to transmit the first downlink data channel with the size of the resource that is allocated to the first downlink data channel and that is indicated by the first pre-scheduling indication information.

For the foregoing optional implementation, an optional implementation corresponding to the network device is as follows:
Optionally, in the second aspect, the first pre-scheduling indication information is specifically used to instruct the terminal device to receive the first downlink data channel in a first time domain scheduling unit set. The first downlink data channel included in the downlink signal sent by the network device to the terminal device is carried in a second time domain scheduling unit set, the first time domain scheduling unit set is totally different from the second time domain scheduling unit set, or the second time domain scheduling unit set includes the first time domain scheduling unit set, or the second time domain scheduling unit set partially overlaps with the first time domain scheduling unit set.

It should be noted that, the first time domain scheduling unit set herein may include one or more time domain scheduling units, and the second time domain scheduling unit set may also include one or more time domain scheduling units.

Optionally, the first pre-scheduling indication information includes first resource information, and the first resource information indicates a resource of the first downlink data channel.

Some post-scheduling indication information in the at least one piece of post-scheduling indication information further includes second resource information, and the second resource information indicates resource information of a first downlink data channel on which transmission is not completed and that is carried on the resource indicated by the first resource information.

In another optional implementation, after the terminal device in the first aspect receives the first pre-scheduling indication information sent by the network device, the terminal device further receives at least one physical layer control channel sent by the network device. The at least one physical layer control channel is used to indicate some or all resources occupied by the first downlink data channel. Correspondingly, in the second aspect, after the network device sends the first pre-scheduling indication information, the network device further sends the at least one physical layer control channel to the user equipment.

In still another optional implementation, in the first aspect, the terminal device further receives a first threshold sent by the network device. The first threshold is used to determine whether to continue receiving the first downlink data channel. The first threshold may be sent by the network device in a semi-static manner, for example, by using radio resource control (radio resource control, RRC) signaling. Correspondingly, in the second aspect, the network device further sends the first threshold to the terminal device.

In this manner, the terminal device may further determine, based on the resource size indicated by the first pre-scheduling indication information, the first threshold, and the size of the resource determined by the terminal device according to the at least one piece of post-scheduling indication information, whether to continue receiving the first downlink data channel. Correspondingly, the network device may further determine, based on the resource size indicated by the first pre-scheduling indication information, the first threshold, and the size of the resource indicated by the at least one piece of post-scheduling indication information, whether to continue sending the first downlink data channel to the terminal device.

**BRIEF DESCRIPTION OF DRAWINGS**

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a schematic flowchart of an example of a downlink resource scheduling method according to an embodiment of the present invention;
FIG. 2 is a schematic diagram of an example of a resource diagram according to an embodiment of the present invention;
FIG. 3A and FIG. 3B are a schematic diagram of another example of a resource diagram according to an embodiment of the present invention;
FIG. 4A and FIG. 4B are a schematic diagram of still another example of a resource diagram according to an embodiment of the present invention;
FIG. 5 is a schematic flowchart of another example of a downlink resource scheduling method according to an embodiment of the present invention;
FIG. 6 is a schematic block diagram of an example of a terminal device according to an embodiment of the present invention;

FIG. 7 is a schematic block diagram of an example of a network device according to an embodiment of the present invention;

FIG. 8 is a schematic block diagram of another example of a terminal device according to an embodiment of the present invention; and

FIG. 9 is a schematic block diagram of another example of a network device according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

The following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

Terminologies such as "component", "module", and "system" used in this specification are used to indicate computer-related entities, hardware, firmware, combinations of hardware and software, software, or software being executed. For example, a component may be but is not limited to a process that runs on a processor, a processor, an object, an executable file, a thread of execution, a program, and/or a computer. As shown in figures, both a computing device and an application that runs on a computing device may be components. F components may reside within a process and/or a thread of execution, and a component may be located on one computer and/or distributed between two or more computers. In addition, these components may be executed from various computer readable media that store various data structures. The components may communicate by using a local and/or remote process and according to, for example, a signal having F data packets (for example, data from two components interacting with another component in a local system, a distributed system, and/or across a network such as the Internet interacting with other systems by using the signal).

The embodiments are described in the present invention with reference to a terminal device. The terminal device (Terminal) may be referred to as user equipment (User Equipment, terminal device), a mobile station (Mobile Station, MS), a mobile terminal device (Mobile Terminal), or the like. The terminal device may communicate with F core networks by using a radio access network (Radio Access Network, RAN). For example, the terminal device may be a mobile phone (or referred to as a "cellular" phone) or a computer with a mobile terminal device. For example, the terminal device may be a portable, pocket-sized, handheld, computer built-in, or in-vehicle mobile apparatus, or a terminal device in a future 5G network, which exchanges voice and/or data with the radio access network.

In addition, the embodiments are described in the present invention with reference to a network device. The network device may be an evolved NodeB (Evolved NodeB, eNB or e-NodeB for short), a macro base station, a micro base station (also referred to as a "small cell"), a pico base station, an access point (Access Point, AP), a transmission point (Transmission Point, TP), or the like in a Long Term Evolution (Long Term Evolution, LTE) system or its evolved system or a future 5G network.

It should be understood that the technical solutions in the embodiments of the present invention may be applied to various communications systems such as the LTE system or a 5G system, or may be applied to another communications system in which a reference signal needs to be transmitted or signal transmit power needs to be adjusted.

It should be further understood that a symbol is referred to as a single carrier frequency division multiple access (Single Carrier Frequency Division Multiple Access, SC-FDMA) symbol.

In the existing Long Term Evolution (Long Term Evolution, LTE) system, before sending downlink data to a terminal device, a network device first sends scheduling indication information to the terminal device. The scheduling indication information is used to indicate a start location and an end location of a time-frequency resource to be allocated by the network device to the terminal device. After receiving the scheduling indication information, the terminal device receives a downlink signal on the time-frequency resource corresponding to the start location and the end location.

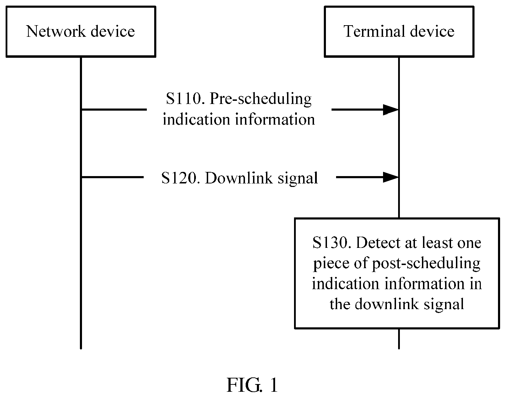

In this downlink resource scheduling method, the location of the time-frequency resource allocated by the network device to the terminal device is fixed. Consequently, flexibility of allocating a resource by the network device is relatively low, and a user requirement cannot be met in some cases. For example, after allocating a time-frequency resource to an Enhanced Mobile Broadband (Enhanced Mobile Broadband, eMBB) user, the network device further needs to allocate a time-frequency resource to an ultra-reliable and low latency communications (Ultra-Reliable and Low Latency Communications, URLLC) user, and the URLLC user and the eMBB user use a same frequency band. The network device can allocate, to the URLLC user, only a time domain resource that is located after a time domain resource occupied by a service of the eMBB user. However, an amount of data of the URLLC service is relatively small but the URLLC service has a relatively high requirement on a latency, and consequently, a requirement of the URLLC user cannot be met. Therefore, a solution for flexible resource scheduling is urgently required to meet requirements of different services. The following describes in detail the downlink resource scheduling method in the embodiments of the present invention with reference to FIG. 1, so that the network device can flexibly allocate a time domain resource.

FIG. 1 is a schematic flowchart of an example of a downlink resource scheduling method according to an embodiment of the present invention. FIG. 1 shows steps or operations of a downlink resource scheduling method 100, but the steps or the operations are merely an example, and other operations or variants of the operations in FIG. 1 may be further performed in this embodiment of the present invention. In addition, the steps in FIG. 1 may be performed in a sequence different from that shown in FIG. 1, and possibly, not all the operations in FIG. 1 need to be performed. The downlink resource scheduling method 100 may include:

S110. A network device sends the first pre-scheduling indication information to a terminal device, and correspondingly, the terminal device receives the first pre-scheduling indication information sent by the network device, where the first pre-scheduling indication information is used to instruct the terminal device to receive a first downlink data channel.

S120. The network device sends a downlink signal to the terminal device, and correspondingly, the terminal device receives, according to the first pre-scheduling indication information, the downlink signal sent by the network device, where the downlink signal includes the first downlink data channel.

S130. The terminal device detects at least one piece of post-scheduling indication information in the downlink signal sent by the network device, where the at least one piece of post-scheduling indication information is used by the terminal device to determine a resource occupied by the first downlink data channel in the received downlink signal.

The resource may be a time domain resource or a frequency domain resource. Certainly, the resource may alternatively be a time domain resource and a frequency domain resource.

Specifically, the network device may send the first pre-scheduling indication information to the terminal device. After receiving the first pre-scheduling indication information, the terminal device may determine that the first downlink data channel needs to be received, and according to the instruction of the first pre-scheduling indication information, start to receive the downlink signal sent by the network device. The terminal device detects the at least one piece of post-scheduling indication information in the downlink signal sent by the network device, and determines, according to the at least one piece of post-scheduling indication information, which time domain resource in time domain resources occupied by the received downlink signal is used to transmit the first downlink data channel and/or determines, according to the at least one piece of post-scheduling indication information, which frequency domain resource in frequency domain resources occupied by the received downlink signal is used to transmit the first downlink data channel. In other words, the terminal device may obtain the first downlink data channel from the received downlink signal according to the at least one piece of post-scheduling indication information. The detecting at least one piece of post-scheduling indication information means that the terminal device (continuously) detects the at least one piece of post-scheduling indication information in the received signal.

In the foregoing implementation process, step S120 may be performed before step S130. It should be noted that, in the implementation process, step 120 may be alternatively performed after step 130. The network device may send the first pre-scheduling indication information to the terminal device. After receiving the first pre-scheduling indication information, the terminal device may determine that the first downlink data channel needs to be received, and according to the instruction of the first pre-scheduling indication information, start to receive the downlink signal sent by the network device. The terminal device detects the at least one piece of post-scheduling indication information in the downlink signal sent by the network device, and determines, according to the at least one piece of post-scheduling indication information, which time domain resource in time domain resources occupied by the received downlink signal is used to transmit the first downlink data channel and/or determines, according to the at least one piece of post-scheduling indication information, which frequency domain resource in frequency domain resources occupied by the received downlink signal is used to transmit the first downlink data channel. The terminal device may further determine, according to the at least one piece of post-scheduling indication information, whether to continue receiving the first downlink data channel. If the terminal device determines to continue receiving the first downlink data channel, the terminal device may continue detecting at least one piece of other post-scheduling indication information in the downlink signal sent by the network device, and determine, according to the at least one piece of other post-scheduling indication information, which time domain resource in the time domain resources occupied by the received downlink signal is used to transmit the first downlink data channel and/or determine, according to the at least one piece of post-scheduling indication information, which frequency domain resource in the frequency domain resources occupied by the received downlink signal is used to transmit the first downlink data channel. In other words, the terminal device may obtain the first downlink data channel from the received downlink signal according to the at least one piece of post-scheduling indication information, and determine whether to continue receiving the first downlink data channel. If the terminal device determines to continue receiving the first downlink data channel, the terminal device may further obtain the first downlink data channel from the received downlink signal according to the at least one piece of other post-scheduling indication information.

It should be noted that, a time domain start location occupied by the downlink signal in this embodiment of the present invention is the same as a time domain location occupied by the first pre-scheduling indication information, or is located after the time domain location occupied by the first pre-scheduling indication information.

Optionally, both pre-scheduling indication information and/or post-scheduling indication information in this embodiment of the present invention may be carried on a physical control channel. For example, the first pre-scheduling indication information may include a physical downlink control channel (Physical Downlink Control Channel, PDCCH). It should be noted that, if the first pre-scheduling indication information is a PDCCH, a resource allocated to the terminal device based on the PDCCH may be occupied by another device in this embodiment of the present invention. In other words, a time domain resource and/or a frequency domain resource indicated by the PDCCH may be flexibly allocated or reallocated. In this case, the terminal device may determine, according to the at least one piece of post-scheduling indication information and the first pre-scheduling indication information, a time domain resource and/or a frequency domain resource occupied by the first downlink data channel, to obtain the first downlink data channel.

For another example, post-scheduling indication information in this embodiment of the present invention may also be a PDCCH. In other words, the post-scheduling indication information in this embodiment of the present invention is carried on the PDCCH. Details are described subsequently.

Compared with the prior art in which the network device allocates a fixed-size time domain resource and/or a fixed-size frequency domain resource to the first downlink data channel of the terminal device (a start location and an end location of a time domain resource allocated to the first downlink data channel are indicated by using one piece of scheduling indication information, the first downlink data channel can be transmitted only on a time domain resource between the start location and the end location, and correspondingly, if frequency domain is fixed, the time domain resource between the start location and the end location can be used only to transmit the first downlink data channel; and/or a start location and an end location of a frequency domain resource allocated to the first downlink data channel are indicated by using one piece of scheduling indication information, the first downlink data channel can be transmitted only on a frequency domain resource between the start location and the end location, and correspondingly, if a time domain resource is determined, the frequency domain resource between the start location and the end location can be used only to transmit the first downlink data channel), in the method in this embodiment of the present invention, a time domain resource and/or a frequency domain resource can be dynamically allocated to the first downlink data channel, and data transmission of a plurality of types of terminal devices can be compatibly performed, to improve terminal device experience.

It should be noted that, in this embodiment of the present invention, a time domain resource may include at least one time domain scheduling unit in time domain, and the time domain scheduling unit may be a unit of a time domain resource that can be scheduled. The time domain scheduling unit in this embodiment of the present invention may be specified in a standard, or may be configured by the network device for the terminal device. For example, one time domain scheduling unit specified in the standard or configured by a network may be one subframe (for example, 14 OFDM symbols or duration of one millisecond), one slot (for example, seven OFDM symbols or 14 OFDM symbols), one mini slot (for example, seven OFDM symbols or less than seven OFDM symbols or less than 14 OFDM symbols), two mini slots (each mini slot includes two OFDM symbols), or one OFDM symbol. Scheduling units of all terminal devices served by the network device may be the same or may be different.

It should be further noted that, in this embodiment of the present invention, each time domain scheduling unit includes at least one time domain unit, and the time domain unit may be a mini slot or a symbol. For example, the standard may further specify that one time domain scheduling unit includes a plurality of mini slots, and a quantity of OFDM symbols included in each mini slot corresponds to an index of the mini slot. For example, the standard may specify that one time domain scheduling unit includes six mini slots, and the mini slots successively correspond to three OFDM symbols, two OFDM symbols, two OFDM symbols, three OFDM symbols, two OFDM symbols, and two OFDM symbols, or two OFDM symbols, two OFDM symbols, three OFDM symbols, two OFDM symbols, two OFDM symbols, and three OFDM symbols. For another example, the standard may specify that one time domain scheduling unit includes three mini slots, and the mini slots successively correspond to three OFDM symbols, two OFDM symbols, and two OFDM symbols, or two OFDM symbols, two OFDM symbols, and three OFDM symbols. For another example, the standard may specify that one time domain scheduling unit includes four mini slots, and the mini slots successively correspond to four OFDM symbols, three OFDM symbols, four OFDM symbols, and three OFDM symbols, or three OFDM symbols, four OFDM symbols, three OFDM symbols, and four OFDM symbols. For another example, the standard may specify that one time domain scheduling unit includes two mini slots, and the mini slots successively correspond to four OFDM symbols and three OFDM symbols, or three OFDM symbols and four OFDM symbols. Optionally, a time domain scheduling unit may include at least one mini slot and at least one OFDM symbol. For example, if one time domain scheduling unit includes seven OFDM symbols, the time domain scheduling unit may include two mini slots and three OFDM symbols, or may include three mini slots and one OFDM symbol, or may include one mini slot and five OFDM symbols, and one mini slot includes two OFDM symbols.

In this embodiment of the present invention, a frequency domain resource may be a resource block or a resource block group. Certainly, the frequency domain resource may alternatively be another unit.

Further, the resource block group may include one or more resource blocks. A quantity of resource blocks included in the resource block group may be fixed. For example, the quantity is specified in a communications standard. Alternatively, the quantity of resource blocks included in the resource block group may be variable. For example, the network device and the terminal device may determine, based on frequency domain bandwidth allocated to the terminal device for uplink or downlink data channel transmission, the quantity of resource blocks included in the resource block group, or the network device and the terminal device may determine, based on carrier bandwidth configured for the terminal device, the quantity of resource blocks included in the resource block group. A carrier may be configured by the network device for the terminal device. Different carriers may be configured for different terminal devices on a same frequency domain resource, Frequency domain ranges of the carriers of the different terminal devices may overlap with each other, frequency domain start locations and frequency domain end locations of the different carriers may be different, and/or bandwidth of the different carriers may be different.

In addition, a time domain scheduling unit in this embodiment of the present invention may be alternatively configured by the network device by using system information, broadcast information, or higher layer signaling. For a possible time domain scheduling unit, refer to the foregoing descriptions. For brevity, details are not described herein again.

It should be further noted that, the time domain scheduling unit may be specified in an existing standard, or may be another unit, of a time domain resource that can be scheduled, newly introduced in a future 5G system or another communications system. Likewise, at least one time domain unit included in the time domain scheduling unit may be a mini slot or a symbol, or may be another time domain unit introduced in a future communications system.

It should be noted that, in this embodiment of the present invention, the first downlink data channel may include a part on which transmission is completed and a part on which transmission is not completed. In an optional example, the at least one piece of post-scheduling indication information may be further used by the terminal device to determine whether transmission of the first downlink data channel is completed. When the terminal device determines, according to the at least one piece of post-scheduling indication information, that transmission of the first downlink data channel is not completed, the terminal device may continue detecting post-scheduling indication information. This solution is described in detail subsequently. When the terminal device determines, according to the at least one piece of post-scheduling indication information, that transmission of the first downlink data channel is not completed, the terminal device may further determine a time domain resource location and/or a frequency domain resource location used to carry the first downlink data channel.

The method in this embodiment of the present invention is described above from an overall perspective. The following describes in detail the first pre-scheduling indication information and post-scheduling indication information in this embodiment of the present invention.

First pre-scheduling indication information:

The terminal device may first detect the first pre-scheduling indication information before receiving the first pre-scheduling indication information. Optionally, the terminal device may periodically detect the first pre-scheduling indication information. A detection period for detecting the first pre-scheduling indication information by the terminal device may be the same as or different from a detection period for detecting the at least one piece of post-scheduling indication information. The detection period may be at least one OFDM symbol, or may be at least one mini slot, one slot, or one or more other time domain units. After receiving the first pre-scheduling indication information, the terminal device may learn that the downlink signal needs to be received. Further, the first pre-scheduling indication information may be further used to indicate at least one of the following information:

   1. Frequency domain location at which the first downlink data channel is received.
   Specifically, the first pre-scheduling indication information may be used to indicate a frequency domain location allocated by the network device to the first downlink data channel. After receiving the first pre-scheduling indication information, the terminal device may detect the first downlink data channel at the frequency domain location. The first pre-scheduling indication information may indicate the frequency domain location in at least one of the following two forms:

      a. The first pre-scheduling indication information may include a start sequence number and an end sequence number of a frequency domain resource block or a frequency domain resource block group.

b. The first pre-scheduling indication information may include a start sequence number of a frequency domain resource block or a frequency domain resource block group and a total quantity of frequency domain resource blocks or frequency domain resource block groups.

The resource block group may include at least one resource block. For details, refer to the foregoing descriptions.

Optionally, when the network device allocates a time domain resource including more than one time domain unit to the terminal device, the network device may allocate different frequency domain locations to the terminal device in different time domain units. For example, in the time domain resource that is occupied by the first downlink data channel and that is determined by the terminal device according to the at least one piece of post-scheduling indication information, the frequency domain location of the first downlink data channel may remain unchanged, or may change in different time domain units. Optionally, a frequency domain location of the downlink signal is greater than or equal to the frequency domain location of the first downlink data channel. For example, a frequency domain resource occupied by the downlink signal may be the same as a frequency domain resource allocated by the network device to the first downlink data channel. In other words, the network device may send the downlink signal on the frequency domain resource allocated to the first downlink data channel.

2. Time domain start location at which the downlink signal is received.

Specifically, the first pre-scheduling indication information may be further used to indicate a time domain start location at which the terminal device receives the downlink signal. Further, the first pre-scheduling indication information may be used to indicate a start location of a time domain resource allocated by the network device to the first downlink data channel. The time domain start location may be indicated in at least the following two manners:

a. The time domain start location is implicitly indicated. The first pre-scheduling indication information is used as an indication, that is, the terminal device starts to receive the downlink signal immediately after receiving the first pre-scheduling indication information.

b. The time domain start location is explicitly indicated. The first pre-scheduling indication information may carry time domain start information, and the time domain start information is used to indicate the time domain start location at which the terminal device receives the downlink signal. Further, the first pre-scheduling indication information may be used to indicate a time domain start location allocated by the network device to the first downlink data channel.

Based on 1 and 2, S120 may include:
the terminal device receives, starting from the time domain start location at the frequency domain location according to the first pre-scheduling indication information, the downlink signal sent by the network device.

3. Size of a time domain resource allocated to the first downlink data channel.

Specifically, the network device may notify, by using the first pre-scheduling indication information, the terminal device of the size of the time domain resource allocated to the first downlink data channel. After receiving the first pre-scheduling indication information, the terminal device may learn of the size of the time domain resource allocated to the first downlink data channel.

3a. Time domain end location at which the downlink signal is received.

Optionally, the first pre-scheduling indication information may further include the time domain end location at which the downlink signal is received. It should be noted that, the time domain end location herein may be specifically a time domain end location of the first downlink data channel.

Specifically, the first pre-scheduling indication information may be further used to indicate a time domain end location at which the terminal device receives the downlink signal. Further, the first pre-scheduling indication information may be used to indicate an end location of the time domain resource allocated by the network device to the first downlink data channel. For the time domain end location at which the downlink signal is received, if a time domain resource and/or a frequency domain resource allocated by the network device to the terminal device by using the first pre-scheduling indication information are/is not reallocated in a downlink signal transmission process, the time domain end location may be an actual end location; if a time domain resource and/or a frequency domain resource allocated by the network device to the terminal device by using the first pre-scheduling indication information are/is reallocated in a downlink signal transmission process, the time domain end location may be an actual end location of the first downlink data channel scheduled by using the first pre-scheduling indication information or may not be the actual end location of the first downlink data channel scheduled by using the first pre-scheduling indication information. This solution is described in detail subsequently. The time domain end location may be indicated in at least the following two manners:

a. The time domain end location is implicitly indicated. For example, the time domain end location may be an end location of a time domain scheduling unit in which the first pre-scheduling information is located, that is, the terminal device receives the downlink signal starting from the time domain start location indicated by the first pre-scheduling information to the end location of the time domain scheduling unit in which the first pre-scheduling information is located. For another example, if the first pre-scheduling information is used to indicate the time domain start location at which the terminal device receives the downlink signal, the time domain end location may be an end location of a time domain scheduling unit corresponding to the time domain start location, that is, the terminal device receives the downlink signal starting from the time domain start location indicated by the first pre-scheduling indication information to the end location of the time domain scheduling unit corresponding to the time domain start location.

b. The time domain end location is explicitly indicated. The first pre-scheduling indication information may carry time domain end information, and the time domain end information is used to indicate the time domain end location at which the terminal device receives the downlink signal. Further, the first pre-scheduling indication information may be used to indicate a time domain end location allocated by the network device to the first downlink data channel.

It may be understood that the time domain start location of the downlink signal, the size of the time domain resource allocated to the first downlink data channel, and the time domain end location of the downlink signal in this embodiment of the present invention are used to determine a time domain resource location. The time domain resource location may be determined by using two of the three types of information. Therefore, the first pre-scheduling indication information may include any two or all of the three types of information.

4. Start detection location at which post-scheduling indication information is detected.

Specifically, the first pre-scheduling indication information may be further used to indicate the start detection location at which post-scheduling indication information is detected, so that the terminal device can directly perform detection at the start detection location, to improve efficiency of detecting post-scheduling indication information by the terminal device.

It should be noted that, various detection locations (for example, both a start detection location and an end detection location) in this embodiment of the present invention include a time domain location. Optionally, when the first pre-scheduling indication information indicates the start detection location, the first pre-scheduling indication information may indicate the start detection location in at least the following manners:

a. The first pre-scheduling indication information is used to indicate a first time domain unit offset, and the first time domain unit offset is a time domain unit offset between a first time domain unit in which the first pre-scheduling indication information is located and a second time domain unit corresponding to the start detection location. The terminal device may determine a location of the second time domain unit based on the first time domain unit offset and the first time domain unit to determine the start detection location.

b. The first pre-scheduling indication information is used to indicate a second time domain unit offset, and the second time domain unit offset is a time domain unit offset between a third time domain unit corresponding to the time domain start location at which the terminal device starts to receive the downlink signal and a second time domain unit corresponding to the start detection location. The terminal device may determine a location of the second time domain unit based on the second time domain unit offset and the second time domain unit to determine the start detection location.

c. When the first pre-scheduling indication information is further used to indicate the size of the time domain resource allocated to the first downlink data channel, the terminal device may determine the start detection location based on the time domain resource size indicated by the first pre-scheduling indication information. For example, the network device allocates N time domain units to the first downlink data channel. Therefore, the terminal device may determine that a time domain unit occupied by post-scheduling indication information is not in the first $N-1$ time domain units occupied by the downlink signal, and the terminal device determines to detect the first post-scheduling indication information in an $N^{th}$ time domain unit occupied by the downlink signal, or detect the first post-scheduling indication information in an $(N+1)^{th}$ time domain unit.

d. When the first pre-scheduling indication information may be further used to indicate the time domain end location of the first downlink data channel, the terminal device may determine the start detection location based on the time domain end location that is of the first downlink data channel and that is indicated by the first pre-scheduling indication information. For example, the terminal device determines to detect the first post-scheduling indication information in a last time domain unit s occupied by the first downlink data channel, or detect the first post-scheduling indication information in a time domain unit s+1 after the last time domain unit occupied by the first downlink data channel.

5. Detection period for detecting post-scheduling indication information.

Specifically, the first pre-scheduling indication information may be further used to indicate a detection period for detecting post-scheduling indication information by the terminal device, and the terminal device may detect the at least one piece of post-scheduling indication information based on the detection period.

6. End detection location at which post-scheduling indication information is detected.

Specifically, the first pre-scheduling indication information may be further used to indicate the end detection location at which post-scheduling indication information is detected. After the terminal device starts to detect the at least one piece of post-scheduling indication information, if the terminal device still fails to detect the at least one piece of post-scheduling indication information at the end detection location (or the at least one piece of successfully detected post-scheduling indication information does not meet a standard, which is described in detail subsequently), the terminal device may stop detecting post-scheduling indication information corresponding to the first pre-scheduling indication information.

7. Related information of hybrid automatic repeat request (Hybrid Automatic Repeat Request, HARQ) feedback information to be sent by the terminal device. The feedback information is used to indicate whether the terminal device correctly receives the first downlink data channel. The feedback information includes an ACK or a NACK. If the terminal device correctly receives the first downlink data channel, the terminal device may send an ACK to the network device. If the terminal device does not correctly receive the first downlink data channel, the terminal device may send feedback information NACK to the network device.

The related information of the feedback information may include at least one of the following information:

a. Frequency domain location occupied for sending the feedback information by the terminal device.

Specifically, the first pre-scheduling indication information may indicate the frequency domain location of the feedback information. Optionally, the first pre-scheduling indication information may indicate a resource sequence number of the feedback information (frequency domain resources that are in a time domain resource and that can be used to send the feedback information are numbered). For example, one OFDM symbol may include 16 frequency domain resources used to transmit the feedback information, and the 16 frequency domain resources may be numbered, so that the terminal device can send, based on the resource sequence number that is of the feedback information and that is indicated by the first pre-scheduling indication information, the feedback information on a frequency domain resource corresponding to the resource sequence number.

b. Time domain location occupied for sending the feedback information by the terminal device.

Specifically, the first pre-scheduling indication information may indicate the time domain location of the feedback information. The first pre-scheduling indication information may indicate the time domain location in at least one of the following two manners:

b1. The first pre-scheduling indication information is used to indicate a third time domain unit offset, and the third time domain unit offset is a time domain unit offset between a first time domain unit in which the first pre-scheduling indication information is located and a fourth time domain unit in which the feedback information is located, and is represented by a quantity of time domain units.

It should be noted that, if a resource occupied by the feedback information is indicated in manner b1, the network device needs to send the "at least one piece of post-scheduling indication information" to the terminal device before a sending time of the feedback information arrives, and the terminal device has sufficient time to demodulate and decode the received downlink signal and generate the feedback information after receiving the "at least one piece of post-scheduling indication information" and before sending the feedback information.

b2. The first pre-scheduling indication information is used to indicate a fourth time domain unit offset, and the fourth time domain unit offset is a time domain unit offset between a time domain unit in which post-scheduling indication information (the indication information is described in detail subsequently) that is in the at least one piece of post-scheduling indication information and that is used by the terminal device to determine that transmission is completed is located and a time domain unit in which the feedback information is located, and is represented by a quantity of time domain units.
b3. Time domain unit location (symbol location, slot location, or mini slot location) or time domain unit number used for a HARQ feedback.

8. Related information for sending the downlink signal, where the related information for sending the downlink signal may include at least one of the following information:

a. a modulation scheme for data in the downlink signal, where the modulation scheme may specifically include one or more of BPSK, $\frac{\pi}{2}$-BPSK, 8BPSK, QPSK, $\frac{\pi}{4}$-QPSK, 16QAM, 64QAM, and 256QAM;
b. pilot configuration related information;
c. a layer quantity (Layer number);
d. precoding matrix related information;
e. data indication information used to indicate whether the current downlink data transmission is initial transmission or retransmission;
f. an information bit quantity of a transport block included in the first downlink data channel and a code rate of the transport block, where the information may be specifically a transport block size (transport block size, TBS) sequence number;
g. a redundancy version, where specifically, if incremental redundancy is performed on a hybrid automatic repeat request (hybrid automatic repeat request, HARQ), a redundancy version number needs to be sent, so that a user can learn, during decoding, a location of a received signal in a decoding soft buffer (soft buffer);
h. a multiple-input multiple-output (Multi-input Multi-output, MIMO) transmission mode; and
i. a modulation and coding scheme index (Modulation and coded scheme index, MCS index).

It should be noted that, the first pre-scheduling indication information includes at least one of the eight types of information. Therefore, before successfully detecting the "at least one piece of post-scheduling indication information", the terminal device may demodulate and equalize received data, and store to-be-decoded data in a buffer. After successfully detecting the "at least one piece of post-scheduling indication information" and obtaining specific indication information content, the terminal device determines the to-be-decoded data that is in the buffer and that belongs to the terminal device, directly constructs a soft buffer (soft buffer), and performs a decoding operation. In this way, data receiving processing by the terminal device can be accelerated, and a latency from data transmission completion to sending of the feedback information by the terminal device can be reduced.

It should be noted that, a behavior and a manner of detecting post-scheduling indication information by the terminal device may be agreed upon in advance or may be indicated by the first pre-scheduling indication information. The first pre-scheduling indication information may further include other information used by the terminal device to detect post-scheduling indication information.

Post-scheduling indication information:

After obtaining the at least one piece of post-scheduling indication information, the terminal device may determine which time domain resource and/or which frequency domain resource in resources occupied by the downlink signal received by the terminal device are/is used to transmit the first downlink data channel. The at least one piece of post-scheduling indication information may include at least the following three manners:

Manner 1

After receiving the first pre-scheduling indication information, the terminal device detects first post-scheduling indication information corresponding to the first pre-scheduling indication information (the at least one piece of post-scheduling indication information includes the first post-scheduling indication information). Specifically, in manner 1, the first pre-scheduling indication information and the first post-scheduling indication information may include a same or corresponding identifier. The terminal device may detect, based on an identifier included in the first pre-scheduling indication information, the first post-scheduling indication information including a same identifier as the identifier included in the first pre-scheduling indication information or including an identifier corresponding to the identifier included in the first pre-scheduling indication information. For example, the first pre-scheduling indication information and the first post-scheduling indication information may include a same transmission process (transmission process) ID (Identity). The transmission process ID may be a HARQ process sequence number or a transmission process sequence number. For another example, the first pre-scheduling indication information and the first post-scheduling indication information may be scrambled by using a same scrambling code.

A time domain resource location at which the first post-scheduling indication information is located is not fixed. The first post-scheduling indication information is used to indicate a time domain resource occupied, in a first time period, by the first downlink data channel in the downlink signal received by the terminal device, and the first time period is a time period from a moment at which the terminal device receives the downlink signal sent by the network device to a moment at which the terminal device successfully detects the first post-scheduling indication information. The first post-scheduling indication information is used to indicate the time domain resource occupied, from the moment at which the terminal device starts to receive the downlink signal sent by the network device to the moment at which the terminal device successfully detects the first post-scheduling indication information, by the first downlink data channel in the downlink signal received by the terminal device. In other words, the first post-scheduling indication information is used to indicate a resource occupied by the first downlink data channel from the time domain start location at which the terminal device receives the downlink signal to a time domain location at which the terminal device successfully detects the first post-scheduling indication information. The first post-scheduling indication information is used to indicate a resource occupied by the first downlink data channel in time domain resources occupied by the downlink signal received by the terminal device. The first post-scheduling indication information is further used to indicate that transmission of the first downlink data channel scheduled by using the first pre-scheduling indication information is completed. The first post-scheduling indication information may indicate, in at least one of the following two manners, that transmission of the first downlink data channel scheduled by using the first pre-scheduling indication information is completed:

1. The first post-scheduling indication information may be used to indicate that transmission of the first downlink data channel is completed. Specifically, when successfully detecting the first post-scheduling indication information corresponding to the first pre-scheduling indication information, the terminal device may determine that transmission of the first downlink data channel is completed.

2. The first post-scheduling indication information may include an end identifier that is used to indicate that transmission of the first downlink data channel is completed. That the first post-scheduling indication information includes the end identifier may mean that the first post-scheduling indication information is scrambled by using a special scrambling code, or may mean that the first post-scheduling indication information includes an end bit.

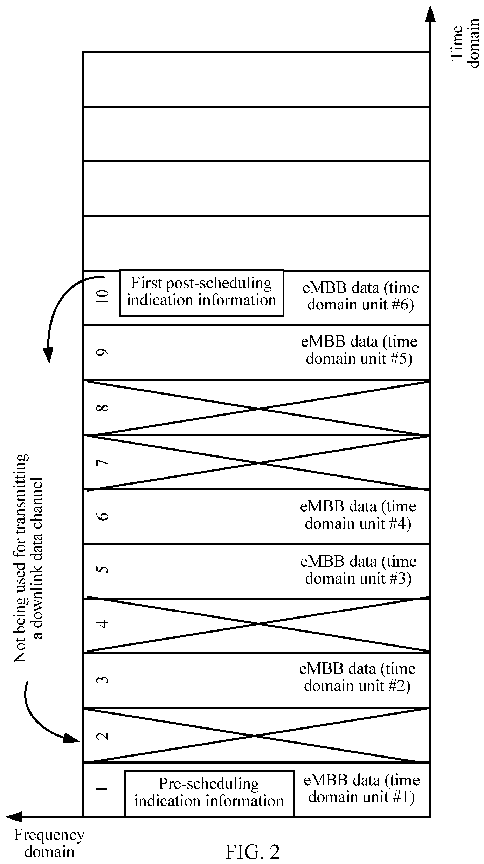

FIG. 2 is a schematic diagram of an example of a resource diagram according to an embodiment of the present invention. For ease of understanding, some time domain units in FIG. 2 are numbered. It is assumed that after receiving the first pre-scheduling indication information, the terminal device starts to receive the downlink signal in a next time domain unit of a time domain unit in which the first pre-scheduling indication information is located. A number of the time domain unit in which the terminal device starts to receive the downlink signal may be set to 1, and subsequent time domain units are successively numbered.

It can be learned from FIG. 2 that time domain resources allocated by the network device to the first downlink data channel such as an eMBB service of the terminal device may be continuous or discontinuous, that is, dynamic. The network device may allocate a time domain start location to the eMBB service, namely, the first downlink data channel. The terminal device may start to receive the downlink signal at the time domain start location (a transmission unit 1). When a requirement of burst transmission is imposed on the network device, for example, a URLLC service needs to be processed, the network device may delay (delay), postpone (postpone), or suspend (suspend) sending of downlink data of the eMBB service (compared with the URLLC service, the eMBB service has a lower requirement on a latency, and therefore a delay in processing the eMBB service has little impact on the eMBB service). The URLLC user service is sent by using a time domain unit 2, so that a requirement of the URLLC service for a low latency can be met. Likewise, when encountering an unexpected situation (for example, an emergency service), the network device may delay, postpone, or suspend the eMBB user service, and process the emergency service before the eMBB service. After processing of the eMBB service is completed, the network device indicates, by using the first post-scheduling indication information, which time domain resource in time domain resources and frequency domain resources that are occupied by the downlink signal received by the terminal device and that are allocated by using the first pre-scheduling indication information is used to transmit the eMBB service.

It should be noted that, allocating, by the network device, time domain resources to the eMBB service and the URLLC service described above is merely an example for description, and shall not constitute a limitation on the present invention. Any solution for flexibly allocating time domain resources to meet different user latency requirements shall fall within the protection scope of the present invention.

In manner 1, the network device can dynamically allocate time domain resources, to improve resource allocation flexibility and meet different user requirements.

Because the time domain location of the first post-scheduling indication information is not fixed (for example, a location of the first post-scheduling indication information is related to a size of a resource allocated by the network device to the first downlink data channel and a size of a resource occupied by the emergency service), the terminal device needs to detect the first post-scheduling indication information. The terminal device may detect the first post-scheduling indication information in at least the following two manners:

1. Continuous detection, that is, the terminal device detects each time domain unit when starting to detect the first post-scheduling indication information. Still using FIG. 2 as an example, the terminal device receives the downlink signal in the time domain unit 1, and successively detects time domain units 2 to 9 until the first post-scheduling indication information is successfully detected in a time domain unit 10.

2. Periodic detection, that is, the terminal device periodically performs detection when starting to detect the first post-scheduling indication information. A detection period of the first post-scheduling indication information may be agreed upon in advance or may be indicated by the first pre-scheduling indication information. It is assumed that the detection period of the first post-scheduling indication information is k time domain units (where k≥2, and when k=1, the periodic detection is equivalent to the continuous detection). The terminal device may detect the first post-scheduling indication information in the following manners:

a. If the first pre-scheduling indication information indicates the start detection location of post-scheduling indication information, the terminal device may start to perform detection based on a detection period at the start detection location. Still using FIG. 2 as an example, if the first pre-scheduling indication information indicates that the size of the time domain resource allocated to the first downlink data channel is six time domain units, the terminal device may determine that the first post-scheduling indication information needs to be detected starting from at least a time domain unit 6. The terminal device may detect the first post-scheduling indication information in the time domain unit 6 based on the time domain resource size indicated by the first pre-scheduling indication information. If k=2, the terminal device successively detects time domain units 6 and 8 until the first post-scheduling indication information is successfully detected in a time domain unit 10.

b. If the first pre-scheduling indication information does not indicate a start detection location of post-scheduling indication information, the terminal device may detect the first post-scheduling indication information based on a detection period at the start time domain location at which the downlink signal is received. A time domain unit of the time domain start location at which the terminal device receives the downlink signal is numbered 1. If k=2, the terminal device may start to detect the first post-scheduling indication information in a time domain unit 2 by using two time domain units as a period. Specifically, the terminal device successively detects time domain units 2, 4, 6, 8, and 10 until the first post-scheduling indication information is successfully detected in a time domain unit 10.

It should be noted that, if the first pre-scheduling indication information does not indicate the start detection location, the terminal device may start to detect the first post-scheduling indication information at the time domain start location at which the terminal device starts to receive the downlink signal (for example, the terminal device starts to detect the first post-scheduling indication information in the time domain unit 1). Alternatively, the terminal device may start to detect the first post-scheduling indication information in the next time domain unit of the time domain unit in which the first pre-scheduling indication information is located, or may start to detect the first post-scheduling indication information in a next time domain unit of a time domain unit in which the terminal device starts to receive the downlink signal (for example, the terminal device starts to detect the first post-scheduling indication information in the time domain unit 2).

After successfully detecting the first post-scheduling indication information, the terminal device may determine, according to the first pre-scheduling indication information and the first post-scheduling indication information, which resource in the resources occupied by the received downlink signal is used to transmit the first downlink data channel. In other words, the terminal device may determine the first downlink data channel from the received downlink signal.

Optionally, in manner 1, after successfully detecting the first post-scheduling indication information, the terminal device may determine, according to N pieces of occupation indication information included in the first post-scheduling indication information, which time domain unit in N time domain units occupied by the downlink signal is used to transmit the first downlink data channel. For example, the first post-scheduling indication information may include a bitmap (bitmap), and a bit included in the bitmap may correspond to the foregoing occupation indication information. A quantity of bits included in the bitmap may be dynamic or fixed. It is assumed that "1" indicates being used for transmitting the first downlink data channel, and "0" indicates not being used for transmitting the first downlink data channel.

Optionally, the quantity of bits included in the bitmap may be dynamic. As shown in FIG. 2, from the moment at which the terminal device starts to receive the downlink signal to the moment at which the terminal device receives the first post-scheduling indication information, the downlink signal received by the terminal device occupies a total of 10 time domain units (1 to 10). The quantity of bits included in the bitmap is 10 (N=10), and bits included in the bitmap are "1010110011". The terminal device receives the first post-scheduling indication information that carries the bitmap, and the terminal device may determine that transmission units 1, 3, 5, 6, 9, and 10 in the time domain resources occupied by the received downlink signal are used to transmit the first downlink data channel.

Optionally, the quantity of bits included in the bitmap may be fixed, and the fixed value may be 7, 14, 21, or the like. It is assumed that the quantity of bits included in the bitmap is a fixed value 14. Still using FIG. 2 as an example, bits included in the bitmap are "10101100110000" (the quantity of bits is 14, and a quantity of valid bits "1010110011" is 10, where N=10. It should be noted that, the terminal device may determine a valid bit in the bitmap based on a location of the first pre-scheduling indication information and a location of post-scheduling indication information). The terminal device receives the first post-scheduling indication information that carries the bitmap. The last four bits in the bitmap are reserved bits. Optionally, if the quantity of bits included in the bitmap is fixed, the terminal device may determine, based on a quantity of reserved bits in the bitmap, whether the received first post-scheduling indication information is incorrect. Still using FIG. 2 as an example, if the bitmap of the first post-scheduling indication information successfully detected by the terminal device is "10101100110110", the terminal device may determine that the indication of the first post-scheduling indication information is incorrect.

Optionally, the first post-scheduling indication information may be further used to indicate a time domain resource and/or a frequency domain resource occupied by the first downlink data channel, and the time domain resource and/or the frequency domain resource are/is a resource/resources in a first time period. The first time period is a time period from a moment at which the terminal device receives the downlink signal sent by the network device to a moment at which the terminal device successfully detects the first post-scheduling indication information. The first post-scheduling indication information is used to indicate a time domain resource and/or a frequency domain resource occupied, from the moment at which the terminal device starts to receive the downlink signal sent by the network device to the moment at which the terminal device successfully detects the first post-scheduling indication information, by the first downlink data channel in the downlink signal received by the terminal device. In other words, the first post-scheduling indication information is used to indicate a resource occupied by the first downlink data channel from the time domain start location at which the terminal device receives the downlink signal to a time domain location at which the terminal device successfully detects the first post-scheduling indication information. The first post-scheduling indication information is used to indicate a resource occupied by the first downlink data channel in time domain resources and/or frequency domain resources occupied by the downlink signal received by the terminal device.

In this case, for specific descriptions of the first post-scheduling indication information, refer to the foregoing descriptions. For brevity, details are not described herein again.

It should be noted that, optionally, in this manner, after successfully detecting the first post-scheduling indication information, the terminal device may determine, according to N×q pieces of occupation indication information included in the first post-scheduling indication information, which time-frequency unit in N×q time-frequency resource units that include N time domain units and q frequency domain units and that are occupied by the downlink signal is used to transmit the first downlink data channel. One frequency domain unit may be one resource block or one resource block group. For example, the first post-scheduling indication information may include a bitmap, and a bit included in the bitmap may correspond to the foregoing occupation indication information. It is assumed that "1" indicates being used for transmitting the first downlink data channel, and "0" indicates not being used for transmitting the first downlink data channel.

Optionally, in manner 1, it is assumed that "1" indicates being used for transmitting the first downlink data channel, and "0" indicates not being used for transmitting the first downlink data channel. If all bits in the bitmap are "1", the first post-scheduling indication information indicates that the resource occupied by the first downlink data channel in the first time period is all time domain resources and/or frequency domain resources in the downlink signal received by the terminal device. If all bits in the bitmap are "0", the first post-scheduling indication information indicates that the downlink signal received by the terminal device in the first time period does not include the resource occupied by the first downlink data channel.

Manner 2

After receiving the first pre-scheduling indication information, the terminal device obtains post-scheduling indication information at a preset location of each time domain scheduling unit, until first post-scheduling indication information corresponding to the first pre-scheduling indication information is obtained at a preset location of a specified time domain scheduling unit. The terminal device may determine, according to the first post-scheduling indication information, that transmission of the first downlink data channel is completed. Each piece of post-scheduling indication information is used to indicate a time domain resource that is in a previous time domain scheduling unit and that is used to transmit the first downlink data channel. The terminal device may obtain the at least one piece of post-scheduling indication information until the first post-scheduling indication information corresponding to the first pre-scheduling indication information is obtained. For specific descriptions of the first post-scheduling indication information, refer to the foregoing related descriptions in manner 1. For brevity, details are not described herein again.

It should be noted that, in manner 2, post-scheduling indication information between the first pre-scheduling indication information and the first post-scheduling indication information may correspond to the first pre-scheduling indication information, that is, the first pre-scheduling indication information and the at least one piece of post-scheduling indication information include a same or corresponding identifier. In this case, the first post-scheduling indication information may indicate, by using an end identifier, that transmission of the first downlink data channel is completed. Alternatively, post-scheduling indication information between the first pre-scheduling indication information and the first post-scheduling indication information may not correspond to the first pre-scheduling indication information, that is, the first pre-scheduling indication information corresponds to only the first post-scheduling indication information. In this case, when the terminal device successfully detects the first post-scheduling indication information corresponding to the first pre-scheduling indication information, the terminal device determines that transmission of the first downlink data channel is completed.

Specifically, after receiving the first pre-scheduling indication information, the terminal device may successfully detect (obtain) post-scheduling indication information at a preset location of each time domain scheduling unit after a time domain scheduling unit in which the first pre-scheduling indication information is located. Post-scheduling indication information at a preset location of a $(j+1)^{th}$ time domain scheduling unit is used to indicate a resource occupied by the first downlink data channel in the downlink signal received by the terminal device in a $j^{th}$ time domain scheduling unit. In other words, the post-scheduling indication information at the preset location of the $(j+1)^{th}$ time domain scheduling unit is used to indicate a time domain resource that is in the $j^{th}$ time domain scheduling unit and that is used to transmit the first downlink data channel, where $j\geq1$. That is, post-scheduling indication information in a next time domain scheduling unit is used to indicate a time domain resource occupation status of a previous time domain scheduling unit.

Optionally, post-scheduling indication information in the $j^{th}$ time domain scheduling unit may be located at a preset location of the $j^{th}$ time domain scheduling unit. That is, post-scheduling indication information in a current time domain scheduling unit is used to indicate a time domain resource occupation status of the current time domain scheduling unit.

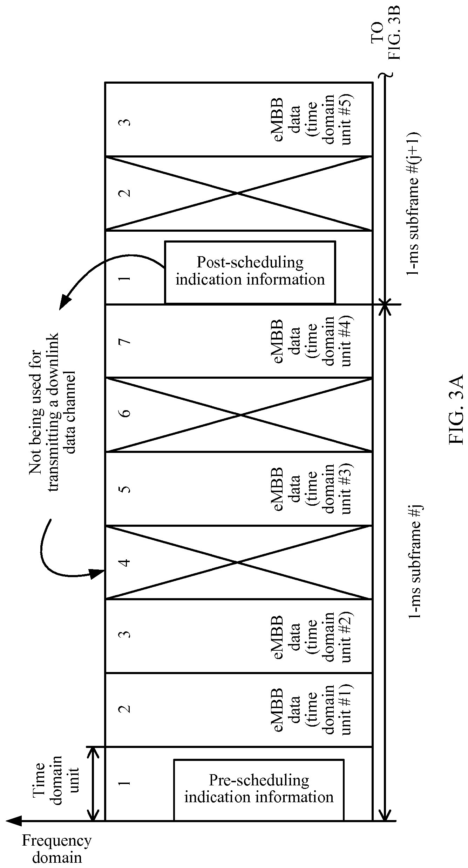

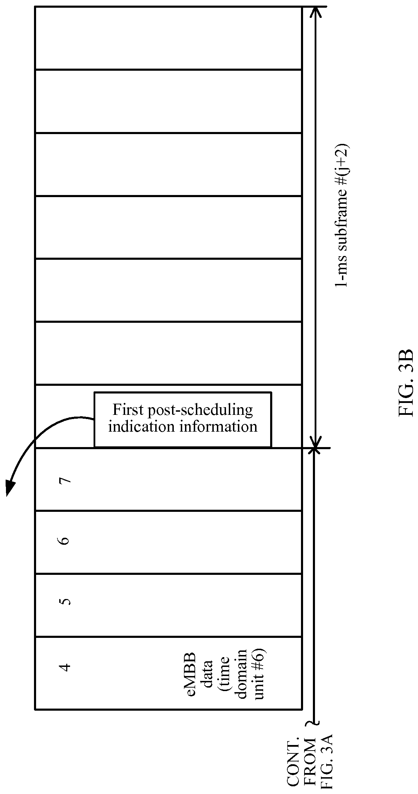

FIG. 3A and FIG. 3B are a schematic diagram of another example of a resource diagram according to an embodiment of the present invention. For example, the terminal device determines, based on an end identifier in the first post-scheduling indication information, that transmission of the first downlink data channel is completed. As shown in FIG. 3A and FIG. 3B, for example, a time domain scheduling unit is a 1-ms subframe. After obtaining the first pre-scheduling indication information in a subframe j, the terminal device may obtain a first piece of post-scheduling indication information in a subframe j+1, and the first piece of post-scheduling indication information is used to indicate which time domain resource in the subframe j is used to transmit the first downlink data channel. Because the first piece of post-scheduling indication information does not include an end identifier, the terminal device determines that transmission of the first downlink data channel is not completed. The terminal device continues performing receiving and detecting the subframe j+1, and obtains, at a preset location of a subframe j+2, the first post-scheduling indication information that is corresponding to the first pre-scheduling indication information and that carries an end identifier. After successfully detecting the first post-scheduling indication information, the terminal device may determine that transmission of the first downlink data channel is completed. The terminal device may determine, according to the first pre-scheduling indication information and the at least one piece of successfully detected post-scheduling indication information, which time domain resource in time domain resources occupied by the received downlink signal is used to transmit the first downlink data channel. In other words, the terminal device may determine the first downlink data channel from the received downlink signal.

For another example, the terminal device determines, based on a size of a time domain resource that is used to transmit the first downlink data channel and that is indicated by the first post-scheduling indication information, that transmission of the first downlink data channel is completed. As shown in FIG. 3A and FIG. 3B, for example, a time domain scheduling unit is a 1-ms subframe. The terminal device obtains a first piece of post-scheduling indication information at a preset location of a subframe j+1, and the first post-scheduling indication information is used to indicate which time domain resource in a subframe j is used to transmit the first downlink data channel. The terminal device determines that a size of a time domain resource that is in the subframe j and that is used to transmit the first downlink data channel is less than the size that is of the time domain resource allocated to the first downlink data channel and that is indicated by the first pre-scheduling indication information, and the terminal device determines that transmission of the first downlink data channel is not completed. The terminal device continues performing receiving and detecting the subframe j+1, and obtains, at a preset location of a subframe j+2, the first post-scheduling indication information corresponding to the first pre-scheduling indication information. The first post-scheduling indication information is used to indicate which time domain resource in the subframe j+1 is used to transmit the first downlink data channel. The terminal device determines that a sum of the size of the time domain resource that is in the subframe j and that is used to transmit the first downlink data channel and a size of a time domain resource that is in the subframe j+1 and that is used to transmit the first downlink data channel is equal to the size that is of the time domain resource allocated to the first downlink data channel and that is indicated by the first pre-scheduling indication information, and the terminal device determines that transmission of the first downlink data channel is completed.

Further, if the terminal device determines, based on the size that is of the time domain resource allocated to the first downlink data channel and that is indicated by the first pre-scheduling indication information and a size that is of a time domain resource occupied by the first downlink data channel and that is determined by using all successfully detected post-scheduling indication information, whether transmission of the first downlink data channel is completed, when determining, according to all the post-scheduling indication information, the size of the time domain resource occupied by the first downlink data channel, the terminal device may exclude a predefined time domain resource and a predefined frequency domain resource that are not used to transmit a data channel. That is, the size that is of the time domain resource occupied by the first downlink data channel and that is determined by using all the post-scheduling indication information does not include the predefined time domain resource and the predefined frequency domain resource that are not used to transmit a data channel. Predefinition may be preconfigured in the device or may be preconfigured by the network device for the terminal device. For example, if a communications system is an LTE system, the terminal device first determines, by using a PCFICH (Physical Control Format Indicator Channel, physical control format indicator channel), a quantity of OFDM symbols occupied by a PDCCH area in the subframe, and excludes the PDCCH area from time-frequency resources that can be used to transmit a data channel. For example, in a 5G system, the terminal device may exclude a time-frequency resource that is specially used for carrying a PDCCH and a reference signal (reference signal, RS). If frequency hopping time-frequency resource mapping is performed on the first downlink data channel scheduled by using the first pre-scheduling indication information, and transmission of the first downlink data channel is not completed in the $j^{th}$ time domain scheduling unit, a frequency hopping location of the first downlink data channel transmitted in the $(j+1)^{th}$ time domain scheduling unit may be a continuation of a frequency hopping location in the $j^{th}$ time domain scheduling unit, or may be a restart in the $(j+1)^{th}$ time domain scheduling unit.

Optionally, if transmission of the first downlink data channel is not completed, and the terminal device may determine, based on the time domain resource size indicated by the first pre-scheduling indication information and the size that is of the time domain resource occupied by the first downlink data channel and that is determined by using all the successfully detected post-scheduling indication information, whether transmission of the first downlink data channel is completed, the network device transmits the first downlink data channel on a frequency domain resource indicated by the first pre-scheduling indication information in a first available time domain unit other than a predefined time domain resource and a predefined frequency domain resource that are not used to transmit a data channel. In this case, if the terminal device determines, in the $j^{th}$ time domain scheduling unit, that transmission of the first downlink data channel is completed, the terminal device receives the first downlink data channel on a frequency domain resource indicated by the first pre-scheduling indication information in a first available time domain unit of the $(j+1)^{th}$ time domain scheduling unit other than a predefined time domain resource and a frequency domain resource that are not used to transmit a data channel. For a resource other than the predefined time domain resource and the predefined frequency domain resource that are not used to transmit a data channel, refer to the foregoing descriptions. Details are not described herein again.

For another example, the terminal device receives the first downlink data channel according to the first pre-scheduling indication information and the at least one piece of post-scheduling indication information. As shown in FIG. 3A and FIG. 3B, for example, a time domain scheduling unit is a 1-ms subframe. After obtaining the first pre-scheduling indication information in a subframe j, the terminal device receives a signal at least at a frequency domain location that is of the first downlink data channel and that is indicated by the first pre-scheduling indication information in the subframe j. The terminal device may obtain a first piece of post-scheduling indication information at a preset location of a subframe j+1, and the first piece of post-scheduling indication information is used to indicate which time domain resource in the subframe j is used to transmit the first downlink data channel. Because the first piece of post-scheduling indication information does not include an end identifier, the terminal device determines that transmission of the first downlink data channel is not completed. In other words, the terminal device determines that the signal received at the frequency domain location that is of the first downlink data channel and that is indicated by the first pre-scheduling indication information in the subframe j is a part of signals of the first downlink data channel. The terminal device continues performing receiving and detecting the subframe j+1, and receives a signal at least at a frequency domain location that is of the first downlink data channel and that is indicated by the first pre-scheduling indication information in the subframe j+1. The terminal device may obtain, at a preset location of a subframe j+2, the first post-scheduling indication information that is corresponding to the first pre-scheduling indication information and that carries an end identifier. The first post-scheduling indication information is used to indicate which time domain resource in the subframe j+1 is used to transmit the first downlink data channel. After successfully detecting the first post-scheduling indication information, the terminal device may determine that transmission of the first downlink data channel is completed. In other words, the terminal device determines that the signals received at the frequency domain locations that are of the first downlink data channel and that are indicated by the first pre-scheduling indication information in the subframe j and the subframe j+1 are all signals of the first downlink data channel.

For another example, the terminal device receives the first downlink data channel according to the first pre-scheduling indication information and the at least one piece of post-scheduling indication information. As shown in FIG. 3A and FIG. 3B, for example, a time domain scheduling unit is a 1-ms subframe. After obtaining the first pre-scheduling indication information in a subframe j, the terminal device receives a signal at least at a frequency domain location that is of the first downlink data channel and that is indicated by the first pre-scheduling indication information in the subframe j. The terminal device may obtain a first piece of post-scheduling indication information at a preset location of a subframe j+1, and the first piece of post-scheduling indication information is used to indicate which time domain resource in the subframe j is used to transmit the first downlink data channel. The terminal device determines that a size of a time domain resource that is in the subframe j and that is used to transmit the first downlink data channel is less than the size that is of the time domain resource allocated to the first downlink data channel and that is indicated by the first pre-scheduling indication information, and the terminal device determines that transmission of the first downlink data channel is not completed. In other words, the terminal device determines that the signal received at the frequency domain location that is of the first downlink data channel and that is indicated by the first pre-scheduling indication information in the subframe j is a part of signals of the first downlink data channel. The terminal device continues performing receiving and detecting the subframe j+1, and receives a signal at least at a frequency domain location that is of the first downlink data channel and that is indicated by the first pre-scheduling indication information in the subframe j+1. The terminal device may obtain, at a preset location of a subframe j+2, the first post-scheduling indication information corresponding to the first pre-scheduling indication information. The first post-scheduling indication information is used to indicate which time domain resource in the subframe j+1 is used to transmit the first downlink data channel. The terminal device determines that a sum of the size of the time domain resource that is in the subframe j and that is used to transmit the first downlink data channel and a size of a time domain resource that is in the subframe j+1 and that is used to transmit the first downlink data channel is equal to the size that is of the time domain resource allocated to the first downlink data channel and that is indicated by the first pre-scheduling indication information, and the terminal device determines that transmission of the first downlink data channel is completed. In other words, the terminal device determines that the signals received at the frequency domain locations that are of the first downlink data channel and that are indicated by the first pre-scheduling indication information in the subframe j and the subframe j+1 are all signals of the first downlink data channel.

It should be noted that, in the foregoing descriptions of the present invention, a subframe is merely an example for description. In a specific implementation process, the subframe may be replaced by any time domain scheduling unit or any time domain unit described above. It should be further noted that, a time domain resource size in this embodiment of the present invention may be expressed as a quantity of time domain units or may be expressed as a quantity of time-frequency resource units (for example, resource elements, REs).

Optionally, in manner 2, after successfully detecting the at least one piece of post-scheduling indication information, the terminal device may determine, according to M pieces of occupation indication information included in each piece of post-scheduling indication information, a time domain resource occupied by the downlink data channel in each piece of post-scheduling indication information. For example, each piece of post-scheduling indication information may include a bitmap, and a quantity of bits included in the bitmap is the same as a quantity of time domain units in a time domain scheduling unit. Still using FIG. 3A and FIG. 3B as an example, it is assumed that "1" indicates being used for transmitting the first downlink data channel, and "0" indicates not being used for transmitting the first downlink data channel. One time domain scheduling unit is one subframe, and one subframe includes seven time domain units. A bitmap included in post-scheduling indication information at a preset location of a subframe j+1 may be "0110101", and bits included in post-scheduling indication information (the first post-scheduling indication information) at a preset location of a subframe j+2 may be "0011000". The terminal device may determine, according to pre-scheduling indication information and the at least one piece of post-scheduling indication information, a time domain resource that is occupied by the first downlink data channel and that is in the time domain resources occupied by the received downlink signal.

Optionally, in manner 2, after successfully detecting the at least one piece of post-scheduling indication information, the terminal device may determine, according to M×q pieces of occupation indication information included in the first post-scheduling indication information, which time-frequency unit in M×q time-frequency resource units that include M time domain units and q frequency domain units and that are occupied by the downlink signal is used to transmit the first downlink data channel. One frequency domain unit may be one resource block or one resource block group. For example, the first post-scheduling indication information may include a bitmap, and a bit included in the bitmap may correspond to the foregoing occupation indication information. It is assumed that "1" indicates being used for transmitting the first downlink data channel, and "0" indicates not being used for transmitting the first downlink data channel.

Optionally, in manner 2, it is assumed that "1" indicates being used for transmitting the first downlink data channel, and "0" indicates not being used for transmitting the first downlink data channel. If all bits in the bitmap are "1", the first post-scheduling indication information indicates that a resource occupied by the first downlink data channel in a first time period is all time domain resources and/or frequency domain resources in the downlink signal received by the terminal device. If all bits in the bitmap are "0", the first post-scheduling indication information indicates that the downlink signal received by the terminal device in the first time period does not include the resource occupied by the first downlink data channel.

Optionally, in manner 2, a $j^{th}$ piece of post-scheduling indication information in the $j^{th}$ time domain scheduling unit may be further used to indicate a quantity of time domain units that are used to transmit the first downlink data channel after the $j^{th}$ time domain scheduling unit.

Optionally, in manner 2, the $j^{th}$ piece of post-scheduling indication information in the $j^{th}$ time domain scheduling unit may further include at least one of the following information about a time domain resource location and a frequency domain resource location that are used to transmit the first downlink data channel after the $j^{th}$ time domain scheduling unit:

    a. a time domain resource start location;
    b. a time domain resource end location;
    c. a time domain unit quantity;
    d. a frequency domain resource start location;
    e. a frequency domain resource end location; and
    f. a quantity of frequency domain resource blocks or frequency domain resource block groups.

It should be noted that, the foregoing information about the time domain resource location and the frequency domain resource location that are used to transmit the first downlink data channel after the $j^{th}$ time domain scheduling unit herein may indicate a time domain resource and a frequency domain resource of a first downlink data channel on which transmission is completed, or may indicate a time domain resource and a frequency domain resource of a first downlink data channel on which transmission is completed and a time domain resource and a frequency domain resource of a first downlink data channel on which transmission is not completed, or may indicate a time domain resource and a frequency domain resource of a first downlink data channel on which transmission is not completed.

Optionally, the post-scheduling indication information may be further used to indicate at least one of the following information about the first downlink data channel carried in the time domain resource and the frequency domain resource:

    g. a modulation scheme;
    h. pilot configuration related information;
    i. a layer quantity;
    j. precoding matrix related information; and
    k. a MIMO transmission mode.

Optionally, if the $j^{th}$ piece of post-scheduling indication information in the $j^{th}$ time domain scheduling unit described above may be further used to indicate transmission information of the first downlink data channel after the $j^{th}$ time domain scheduling unit, and an end identifier that is used to indicate whether transmission of the first downlink data channel scheduled by the terminal device by using the first pre-scheduling indication information is completed may be further used to indicate whether the $j^{th}$ piece of post-scheduling indication information includes transmission information of a first downlink data channel on which transmission is not completed.

Optionally, if the $j^{th}$ piece of post-scheduling indication information in the $j^{th}$ time domain scheduling unit described above may be further used to indicate the transmission information of the first downlink data channel after the $j^{th}$ time domain scheduling unit, the terminal device may determine, based on whether the $j^{th}$ time domain scheduling unit includes the transmission information of the first downlink data channel, whether transmission of the first downlink data channel is completed.

For another example, the terminal device receives the first downlink data channel according to the first pre-scheduling indication information and the at least one piece of post-scheduling indication information. After obtaining the first pre-scheduling indication information in a time domain scheduling unit j, the terminal device receives a signal at least at a frequency domain location that is of the first downlink data channel and that is indicated by the first pre-scheduling indication information in the time domain scheduling unit j. The terminal device may obtain a first piece of post-scheduling indication information at a preset location of the time domain scheduling unit j or a time domain scheduling unit j+1, and the first piece of post-scheduling indication information is used to indicate which time domain resource and/or which frequency domain resource in the time domain scheduling unit j are/is used to transmit the first downlink data channel. Because the first piece of post-scheduling indication information further includes information about a time domain resource and/or a frequency domain resource in the time domain scheduling unit j+1 after the time domain scheduling unit j that are/is used to transmit the first downlink data channel, the terminal device determines that transmission of the first downlink data channel is not completed. In other words, the terminal device may determine that the signal received at the frequency domain location that is of the first downlink data channel and that is indicated by the first pre-scheduling indication information in the time domain scheduling unit j is a part of signals of the first downlink data channel. The terminal device continues performing receiving and detecting the time domain scheduling unit j+1, and receives a signal at least at a time domain resource location and/or a frequency domain resource location of the first downlink data channel in the time domain scheduling unit j+1 that are/is indicated by the first piece of post-scheduling indication information. The terminal device may obtain a second piece of post-scheduling indication information at a preset location of the time domain scheduling unit j+1 or a time domain scheduling unit j+2. Because the second piece of post-scheduling indication information includes information about a time domain resource and/or a frequency domain resource in the time domain scheduling unit j+2 after the time domain scheduling unit j+1 that are/is used to transmit the first downlink data channel, the terminal device determines that transmission of the first downlink data channel is not completed. The terminal device continues performing receiving and detecting the time domain scheduling unit j+2, and receives a signal at least at a time domain resource location and/or a frequency domain resource location of the first downlink data channel in the time domain scheduling unit j+2 that are/is indicated by the second piece of post-scheduling indication information. The terminal device may obtain, at a preset location of the time domain scheduling unit j+2 or a time domain scheduling unit j+3, the first post-scheduling indication information that is corresponding to the first pre-scheduling indication information and that carries an end identifier. After successfully detecting the first post-scheduling indication information, the terminal device may determine that transmission of the first downlink data channel is completed. The terminal device may determine that the signals received at the time-frequency resource locations that are of the first downlink data channel and that are indicated by the first pre-scheduling indication information in the time domain scheduling unit j, the first post-scheduling information in the time domain scheduling unit j+1, and the second post-scheduling information in the time domain scheduling unit j+2 are all signals of the first downlink data channel.

Optionally, in manner 2, if the terminal device determines, based on the time domain resource size indicated by the first pre-scheduling indication information and a size that is of a time domain resource occupied by the first downlink data channel and this is determined by using the at least one piece of successfully detected post-scheduling indication information, that transmission of the first downlink data channel is not completed or the terminal device determines, when determining that the at least one piece of post-scheduling indication information does not include an end identifier, that transmission of the first downlink data channel is not completed, the terminal device may detect at least one physical layer control channel used for scheduling the first downlink data channel. The at least one physical layer control channel used for scheduling the first downlink data channel may be a PDCCH. The at least one physical layer control channel used for scheduling the first downlink data channel may be sent in a time domain scheduling unit in which a last piece of post-scheduling indication information that is used by the terminal device to determine whether transmission of the first downlink data channel is completed is located, or may be sent in a time domain scheduling unit after the time domain scheduling unit. The at least one physical layer control channel used for scheduling the first downlink data channel may include at least one of the following information about a time-frequency resource used to transmit the first downlink data channel:

a. a time domain resource start location;
b. a time domain resource end location;
c. a time domain unit quantity;
d. a frequency domain resource start location;
e. a frequency domain resource end location; and
f. a quantity of frequency domain resource blocks or frequency domain resource block groups.

Optionally, the at least one physical layer control channel used for scheduling the first downlink data channel may be further used to indicate at least one of the following information:

g. a modulation scheme;
h. pilot configuration related information;
i. a layer quantity;
j. precoding matrix related information; and
k. a MIMO transmission mode.

For example, the terminal device receives the first downlink data channel according to the first pre-scheduling indication information, the at least one piece of post-scheduling indication information, and the at least one physical layer control channel. After obtaining the first pre-scheduling indication information in a time domain scheduling unit j, the terminal device receives a signal at least at a frequency domain location that is of the first downlink data channel and that is indicated by the first pre-scheduling indication information in the time domain scheduling unit j. The terminal device may obtain a first piece of post-scheduling indication information at a preset location of the time domain scheduling unit j or a time domain scheduling unit j+1. According to the foregoing method, the terminal device determines, based on the time domain resource size and the time-frequency resource location that are indicated by the first pre-scheduling indication information, and a size that is of a time domain resource occupied by the first downlink data channel and that is determined by using the first piece of successfully detected post-scheduling indication information, that transmission of the first downlink data channel is not completed; or the terminal device determines, when determining that the first piece of post-scheduling indication information does not include an end identifier, that transmission of the first downlink data channel is not completed. In other words, the terminal device determines that the signal received at the frequency domain location that is of the first downlink data channel and that is indicated by the first pre-scheduling indication information in the time domain scheduling unit j is a part of signals of the first downlink data channel. The terminal device continues performing receiving and detecting at least one physical layer control channel, and successfully detects a first physical layer control channel in the time domain scheduling unit j+1, and the first physical layer control channel indicates a time domain resource location and/or a frequency domain resource location of the first downlink data channel in the time domain scheduling unit j+1. The terminal device receives a signal at least at the time domain resource location and/or the frequency domain resource location of the first downlink data channel in the time domain scheduling unit j+1 that are/is indicated by the first physical layer control channel. The terminal device may obtain a second piece of post-scheduling indication information at a preset location of the time domain scheduling unit j+1 or a time domain scheduling unit j+2. According to the foregoing method, the terminal device determines, based on the time domain resource size and the time-frequency resource location that are indicated by the first pre-scheduling indication information, and a size that is of a time domain resource occupied by the first downlink data channel and that is determined by using the first piece of successfully detected post-scheduling indication information, the first physical control channel, and the second piece of post-scheduling indication information, that transmission of the first downlink data channel is not completed; or the terminal device determines, when determining that the second post-scheduling indication information does not include an end identifier, that transmission of the first downlink data channel is not completed. The terminal device continues performing receiving and detecting at least one physical layer control channel, and successfully detects a second physical layer control channel in the time domain scheduling unit j+2, and the second physical layer control channel indicates a time domain resource location and/or a frequency domain resource location of the first downlink data channel in the time domain scheduling unit j+2. The terminal device receives a signal at least at the time domain resource location and/or the frequency domain resource location of the first downlink data channel in the time domain scheduling unit j+2 that are/is indicated by the second physical layer control channel. The terminal device may obtain, at a preset location of the time domain scheduling unit j+2 or a time domain scheduling unit j+3, the first post-scheduling indication information that is corresponding to the first pre-scheduling indication information and that carries an end identifier. After successfully detecting the first post-scheduling indication information, the terminal device may determine that transmission of the first downlink data channel is completed. The terminal device may determine that the signals received at the time-frequency resource locations that are of the first downlink data channel and that are indicated by the first pre-scheduling indication information in the time domain scheduling unit j, the first physical layer control channel in the time domain scheduling unit j+1, and the second physical layer control channel in the time domain scheduling unit j+2 are all signals of the first downlink data channel.

Manner 3

The first pre-scheduling indication information is further used to indicate a size of a time domain resource allocated by the network device to the terminal device. After receiving the first pre-scheduling indication information, the terminal device may detect (or obtain) post-scheduling indication information at a preset location of each time domain scheduling unit after a time domain scheduling unit in which the first pre-scheduling indication information is located. Post-scheduling indication information at a preset location of a $(j+1)^{th}$ time domain scheduling unit is used to indicate a time domain unit that is reallocated by the terminal device in a $j^{th}$ time domain scheduling unit (or a time domain unit that is not used to transmit the first downlink data channel), where $j \geq 1$. That is, post-scheduling indication information in a next time domain scheduling unit is used to indicate a time domain resource occupation status of a previous time domain scheduling unit.

Optionally, post-scheduling indication information in the $j^{th}$ time domain scheduling unit may be located at a preset location of the $j^{th}$ time domain scheduling unit. That is, post-scheduling indication information in a current time domain scheduling unit is used to indicate a time domain resource occupation status of the current time domain scheduling unit.

In an optional example, in manner 3, after the terminal device receives pre-scheduling indication information, if post-scheduling indication information indicates that the time domain unit is reallocated, the terminal device determines that the time domain unit is not used to transmit the first downlink data channel; otherwise, the terminal device determines that the time domain unit is used to transmit the first downlink data channel. In other words, if corresponding post-scheduling indication information does not indicate that a $k^{th}$ transmission unit in the $j^{th}$ time domain scheduling unit is reallocated, it is determined that the $k^{th}$ transmission unit is used to transmit the first downlink data channel.

Optionally, in manner 3, after the terminal device receives pre-scheduling indication information, if post-scheduling indication information indicates that the time domain-frequency domain unit is reallocated, the terminal device determines that the time domain-frequency domain unit is not used to transmit the first downlink data channel; otherwise, the terminal device determines that the time domain-frequency domain unit is used to transmit the first downlink data channel. In other words, if corresponding post-scheduling indication information does not indicate that a $p^{th}$ frequency domain unit in a $k^{th}$ transmission unit in the $j^{th}$ time domain scheduling unit is reallocated, it is determined that the $p^{th}$ frequency domain unit in the k$^{th}$ transmission unit is used to transmit the first downlink data channel.

After obtaining each piece of post-scheduling indication information, the terminal device determines, based on the time domain resource size indicated by the first pre-scheduling indication information and a size that is of a time domain resource occupied by the first downlink data channel and that is determined by using all successfully detected post-scheduling indication information, whether transmission of the first downlink data channel is completed. When the terminal device determines that transmission of the first downlink data channel is not completed, the terminal device continues detecting post-scheduling indication information. For example, the terminal device determines, according to N pieces of successfully detected post-scheduling indication information, that transmission of the first downlink data channel is not completed, and determines, according to an (N+1)$^{th}$ piece of post-scheduling indication information, that transmission of the first downlink data channel is completed. The N$^{th}$ piece of post-scheduling indication information is the first post-scheduling indication information described above.

It should be noted that, a time domain resource size in this embodiment of the present invention may be expressed as a quantity of time domain units or may be expressed as a quantity of time-frequency resource units (for example, resource elements, REs).

Further, if the terminal device receives the first downlink data channel according to the first pre-scheduling indication information and the at least one piece of post-scheduling indication information, when determining, according to the first pre-scheduling indication information and all the post-scheduling indication information, the size of the time domain resource occupied by the first downlink data channel, the terminal device may exclude a predefined time domain resource and a predefined frequency domain resource that are not used to transmit a data channel. That is, the size that is of the time domain resource occupied by the first downlink data channel and that is determined by using all the post-scheduling indication information does not include the predefined time domain resource and the predefined frequency domain resource that are not used to transmit a data channel. Predefinition may be preconfigured in the device or may be preconfigured by the network device for the terminal device. For example, if a communications system is an LTE system, the terminal device first determines, by using a PCFICH (Physical Control Format Indicator Channel, physical control format indicator channel), a quantity of OFDM symbols occupied by a PDCCH area in the subframe, and excludes the PDCCH area from time-frequency resources that can be used to transmit a data channel. For example, in a 5G system, the terminal device may exclude a time-frequency resource that is specially used for carrying a PDCCH and a reference signal (reference signal, RS). If frequency hopping time-frequency resource mapping is performed on the first downlink data channel scheduled by using the first pre-scheduling indication information, and transmission of the first downlink data channel is not completed in the j$^{th}$ time domain scheduling unit, a frequency hopping location of the first downlink data channel transmitted in the (j+1)$^{th}$ time domain scheduling unit may be a continuation of a frequency hopping location in the j$^{th}$ time domain scheduling unit, or may be a restart in the (j+1)$^{th}$ time domain scheduling unit.

Optionally, if transmission of the first downlink data channel is not completed, and the terminal device may determine, based on the time domain resource size indicated by the first pre-scheduling indication information and the size that is of the time domain resource occupied by the first downlink data channel and that is determined by using all the successfully detected post-scheduling indication information, whether transmission of the first downlink data channel is completed, the network device transmits the first downlink data channel on a frequency domain resource indicated by the first pre-scheduling indication information in a first available time domain unit other than a predefined time domain resource and a predefined frequency domain resource that are not used to transmit a data channel. In this case, if the terminal device determines, in the j$^{th}$ time domain scheduling unit, that transmission of the first downlink data channel is completed, the terminal device receives the first downlink data channel on a frequency domain resource indicated by the first pre-scheduling indication information in a first available time domain unit of the (j+1)$^{th}$ time domain scheduling unit other than a predefined time domain resource and a frequency domain resource that are not used to transmit a data channel. For a resource other than the predefined time domain resource and the predefined frequency domain resource that are not used to transmit a data channel, refer to the foregoing descriptions. Details are not described herein again.

Optionally, a receive modulation symbol ratio threshold may be predefined in the communications standard, or may be configured by the network device for the terminal device by using radio resource control (radio resource control, RRC) signaling. Predefinition is described in detail above, and details are not described herein again. If transmission of the first downlink data channel scheduled by using the first pre-scheduling indication information is not completed, but the terminal device determines that a ratio of received modulation symbols in all modulation symbols of the scheduled first downlink data channel exceeds the receive modulation symbol ratio threshold, the terminal device stops receiving the first data channel; otherwise, the terminal device continues receiving the first data channel. In another optional example, the receive modulation symbol ratio threshold may be related to a modulation and coding scheme index (Modulation and coded scheme index, MCS index). For example, the terminal device can determine, based on the receive modulation symbol ratio threshold only when an MCS index indicated by the first pre-scheduling indication information is less than a specified value, whether to continue receiving the first data channel. For another example, when the network device configures different MCS indexes for the terminal device by using the first pre-scheduling indication information, the terminal device uses different receive modulation symbol ratio thresholds. That is, if an MCS index is used, the network device determines, by using a receive modulation symbol ratio threshold, whether to continue sending the first data channel, and the terminal device determines, by using the same threshold, whether to continue receiving the first data channel.

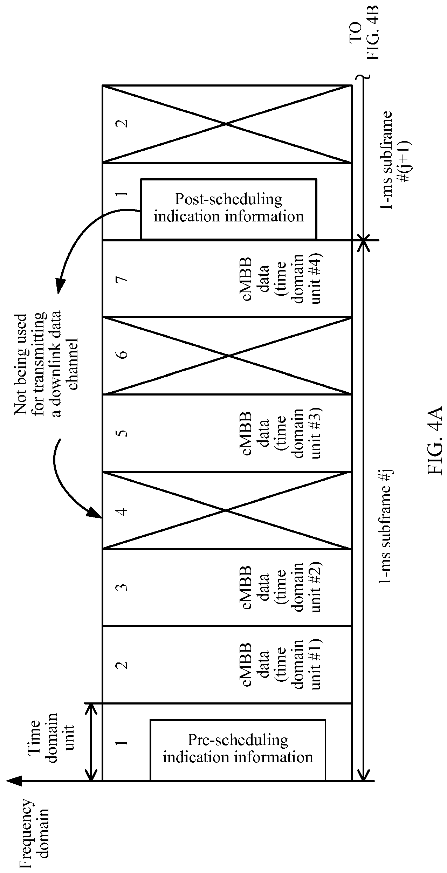

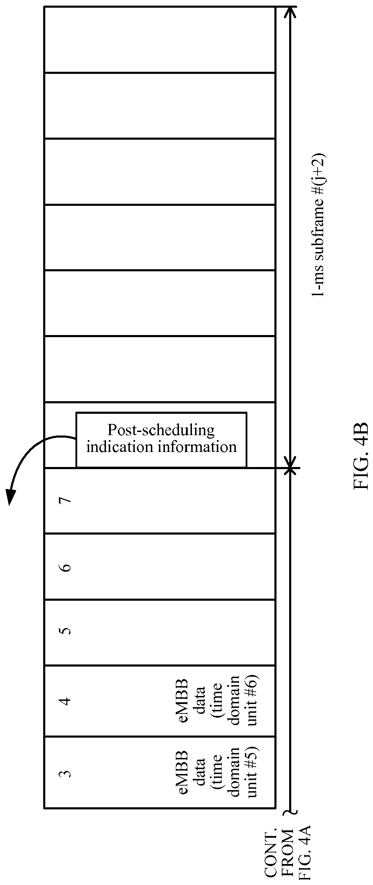

FIG. 4A and FIG. 4B are a resource diagram of a downlink scheduling resource according to an embodiment of the present invention. As shown in FIG. 4A and FIG. 4B, for example, a time domain scheduling unit is a 1-ms subframe. The terminal device obtains the first pre-scheduling indication information in a subframe j, and the first pre-scheduling indication information indicates that the time domain resource occupied by the first downlink data channel includes six transmission units. The terminal device may obtain a first piece of post-scheduling indication information in a subframe j+1, and the first piece of post-scheduling indication information is used to indicate that transmission units 4 and 6 in the subframe j are reallocated (or are not used to transmit the first downlink data channel). The terminal device may determine, according to the first piece of post-scheduling indication information, that transmission units 2, 3, 5, and 7 in the subframe j are (possibly) used to transmit the first data channel. The terminal device determines, based on a time domain resource size indicated by pre-scheduling information and a size that is of a time frequency resource occupied by the first downlink data channel and that is determined by the terminal device according to the first piece of post-scheduling indication information, that transmission of the first downlink data channel is not completed. The terminal device continues obtaining a second piece of post-scheduling indication information in a subframe j+2, and the second piece of post-scheduling indication information is used to indicate that a time domain unit 1 in the subframe j+1 is reallocated (is not used to transmit the first downlink data channel). The terminal device determines, according to the second piece of post-scheduling indication information, that transmission units 2 and 3 in the subframe j+1 are used to transmit the first data channel. In this case, the terminal device has determined six transmission units that are used to transmit the first data channel, and therefore the terminal device determines that transmission of the first data channel is completed.

It should be noted that, in manner 3, the at least one piece of post-scheduling indication information does not include an end identifier. The terminal device determines, based on the time domain resource size indicated by the first pre-scheduling indication information and a size of a time domain resource that is reallocated and that is indicated by the at least one piece of successfully detected post-scheduling indication information, whether transmission of the first downlink data channel is completed.

For example, the terminal device receives the first downlink data channel according to the first pre-scheduling indication information and the at least one piece of post-scheduling indication information. As shown in FIG. 4A and FIG. 4B, for example, a time domain scheduling unit is a 1-ms subframe. After obtaining the first pre-scheduling indication information in a subframe j, the terminal device receives a signal at least at a frequency domain location that is of the first downlink data channel and that is indicated by the first pre-scheduling indication information in the subframe j. The terminal device may obtain a first piece of post-scheduling indication information at a preset location of a subframe j+1, and the first piece of post-scheduling indication information is used to indicate which time domain resource in the subframe j is used to transmit the first downlink data channel. The terminal device determines that a size of a time domain resource that is in the subframe j and that is used to transmit the first downlink data channel is less than the size that is of the time domain resource allocated to the first downlink data channel and that is indicated by the first pre-scheduling indication information, and the terminal device determines that transmission of the first downlink data channel is not completed. In other words, the terminal device determines that the signal received at the frequency domain location that is of the first downlink data channel and that is indicated by the first pre-scheduling indication information in the subframe j is a part of signals of the first downlink data channel. The terminal device continues performing receiving and detecting the subframe j+1, and receives a signal at least at a frequency domain location that is of the first downlink data channel and that is indicated by the first pre-scheduling indication information in the subframe j+1. The terminal device may obtain the first post-scheduling indication information at a preset location of a subframe j+2. The first post-scheduling indication information is used to indicate which time domain resource in the subframe j+1 is used to transmit the first downlink data channel. The terminal device determines that a sum of the size of the time domain resource that is in the subframe j and that is used to transmit the first downlink data channel and a size of a time domain resource that is in the subframe j+1 and that is used to transmit the first downlink data channel is equal to the size that is of the time domain resource allocated to the first downlink data channel and that is indicated by the first pre-scheduling indication information, and the terminal device determines that transmission of the first downlink data channel is completed. In other words, the terminal device determines that the signals received at the frequency domain locations that are of the first downlink data channel and that are indicated by the first pre-scheduling indication information in the subframe j and the subframe j+1 are all signals of the first downlink data channel.

Optionally, a preset location of each time domain scheduling unit in the foregoing manner may be a time domain location at which a PDCCH in each time domain scheduling unit is located.

Optionally, in manner 3, if the terminal device determines, based on the time domain resource size indicated by the first pre-scheduling indication information and a size that is of a time domain resource occupied by the first downlink data channel and that is determined by using the at least one piece of successfully detected post-scheduling indication information, that transmission of the first downlink data channel is not completed, the terminal device may detect at least one physical layer control channel used for scheduling the first downlink data channel. The at least one physical layer control channel used for scheduling the first downlink data channel may be a PDCCH. The at least one physical layer control channel used for scheduling the first downlink data channel may be sent in a time domain scheduling unit in which a last piece of post-scheduling indication information that is used by the terminal device to determine whether transmission of the first downlink data channel is completed is located, or may be sent in a time domain scheduling unit after the time domain scheduling unit. The at least one physical layer control channel used for scheduling the first downlink data channel may include at least one of the following information about a time-frequency resource used to transmit the first downlink data channel:

a. a time domain resource start location;
b. a time domain resource end location;
c. a time domain unit quantity;
d. a frequency domain resource start location;
e. a frequency domain resource end location; and
f. a quantity of frequency domain resource blocks or frequency domain resource block groups.

Optionally, the at least one physical layer control channel used for scheduling the first downlink data channel may be further used to indicate at least one of the following information:

g. a modulation scheme;
h. pilot configuration related information;
i. a layer quantity;
j. precoding matrix related information; and
k. a MIMO transmission mode.

For example, the terminal device receives the first downlink data channel according to the first pre-scheduling indication information, the at least one piece of post-scheduling indication information, and the at least one physical layer control channel. After obtaining the first pre-scheduling indication information in a time domain scheduling unit j, the terminal device receives a signal at least at a frequency domain location that is of the first downlink data channel and that is indicated by the first pre-scheduling indication information in the time domain scheduling unit j. The terminal device may obtain a first piece of post-scheduling indication information at a preset location of the time domain scheduling unit j or a time domain scheduling unit j+1. According to the foregoing method, the terminal device determines, based on the time domain resource size and the time-frequency resource location that are indicated by the first pre-scheduling indication information and a size that is of a time domain resource occupied by the first downlink data channel and that is determined by using the first piece of successfully detected post-scheduling indication information, that transmission of the first downlink data channel is not completed. In other words, the terminal device determines that the signal received at the frequency domain location that is of the first downlink data channel and that is indicated by the first pre-scheduling indication information in the time domain scheduling unit j is a part of signals of the first downlink data channel. The terminal device continues performing receiving and detecting at least one physical layer control channel, and successfully detects a first physical layer control channel in the time domain scheduling unit j+1, and the first physical layer control channel indicates a time domain resource location and/or a frequency domain resource location of the first downlink data channel in the time domain scheduling unit j+1. The terminal device receives a signal at least at the time domain resource location and/or the frequency domain resource location of the first downlink data channel in the time domain scheduling unit j+1 that are/is indicated by the first physical layer control channel. The terminal device may obtain a second piece of post-scheduling indication information at a preset location of the time domain scheduling unit j+1 or a time domain scheduling unit j+2. According to the foregoing method, the terminal device determines, based on the time domain resource size and the time-frequency resource location that are indicated by the first pre-scheduling indication information and a size that is of a time domain resource occupied by the first downlink data channel and that is determined by using the first piece of successfully detected post-scheduling indication information, the first physical control channel, and the second piece of post-scheduling indication information, that transmission of the first downlink data channel is not completed. The terminal device continues performing receiving and detecting at least one physical layer control channel, and successfully detects a second physical layer control channel in the time domain scheduling unit j+2, and the second physical layer control channel indicates a time domain resource location and/or a frequency domain resource location of the first downlink data channel in the time domain scheduling unit j+2. The terminal device receives a signal at least at the time domain resource location and/or the frequency domain resource location of the first downlink data channel in the time domain scheduling unit j+2 that are/is indicated by the second physical layer control channel. The terminal device may obtain, at a preset location of the time domain scheduling unit j+2 or a time domain scheduling unit j+3, the first post-scheduling indication information that is corresponding to the first pre-scheduling indication information and that carries an end identifier. After the terminal device successfully detects the first post-scheduling indication information, the terminal device determines, based on the time domain resource size and the time-frequency resource location that are indicated by the first pre-scheduling indication information, and a size that is of a time domain resource occupied by the first downlink data channel and that is determined by using the first piece of successfully detected post-scheduling indication information, the first physical control channel, the second piece of post-scheduling indication information, the second physical control channel, and the first post-scheduling indication information, that transmission of the first downlink data channel is completed. The terminal device may determine that the signals received at the time-frequency resource locations that are of the first downlink data channel and that are indicated by the first pre-scheduling indication information in the time domain scheduling unit j, the first physical layer control channel in the time domain scheduling unit j+1, and the second physical layer control channel in the time domain scheduling unit j+2 are all signals of the first downlink data channel.

Optionally, the terminal device may detect the PDCCH that is used for scheduling a first downlink data channel on which transmission is not completed, until a predefined time of sending HARQ feedback information arrives.

In still another optional example of manner 3, the first pre-scheduling indication information indicates a time-frequency resource location at which the terminal device sends a HARQ feedback corresponding to the first downlink data channel, and the first pre-scheduling indication information instructs the terminal device to receive the first downlink data channel in a j$^{th}$ time domain scheduling unit. If the terminal device determines, based on the time domain resource size indicated by the first pre-scheduling indication information and a size that is of a time domain resource occupied by the first downlink data channel and that is determined by using successfully detected post-scheduling indication information in the j$^{th}$ time domain scheduling unit, that transmission of the first downlink data channel is not completed, the terminal device demodulates and decodes the received first downlink data channel, and feeds back a receiving result at the specified time-frequency resource location of the HARQ feedback. If feedback information is a NACK, the terminal device detects a PDCCH used for scheduling a first downlink data channel on which transmission is not completed. Content included in the PDCCH is described in detail above, and details are not described herein again.

It should be noted that, in manner 2 and manner 3, post-scheduling indication information used by the terminal device to determine a time domain unit occupied by a downlink data channel in the j$^{th}$ subframe is located at the preset location of the (j+1)$^{th}$ subframe, for example, a PDCCH channel area in the (j+1)$^{th}$ subframe, and this is a preferred implementation of the present invention. Optionally, the post-scheduling indication information used by the terminal device to determine the time domain unit occupied by the downlink data channel in the j$^{th}$ subframe may be located at the preset location of the j$^{th}$ subframe, for example, a last OFDM symbol (at least one last OFDM symbol) in the j$^{th}$ subframe. For details, refer to the foregoing related descriptions. For brevity, details are not described herein again.

It should be noted that, in the foregoing descriptions of the present invention, a subframe is merely an example for description. In a specific implementation process, the subframe may be replaced by any time domain scheduling unit or any time domain unit described above.

Optionally, in manner 3, after successfully detecting the at least one piece of post-scheduling indication information, the terminal device may determine, according to M pieces of occupation indication information included in each piece of post-scheduling indication information, a time domain resource occupied by the downlink data channel in each piece of post-scheduling indication information. For example, each piece of post-scheduling indication information may include a bitmap, and a quantity of bits included in the bitmap is the same as a quantity of time domain units in a time domain scheduling unit. Still using FIG. 4A and FIG. 4B as an example, it is assumed that "1" represents a time domain unit that is reallocated, and "0" represents a time domain unit that is not allocated. One time domain scheduling unit is one subframe, and one subframe includes seven time domain units. A bitmap included in post-scheduling indication information at a preset location of a subframe j+1 may be "0001010". The terminal device may determine, according to the post-scheduling indication information at the preset location of the subframe j+1, that two of six time domain units allocated to the first downlink data channel are reallocated (transmission units 4 and 6). Bits included in post-scheduling indication information (the first post-scheduling indication information) at a preset location of a subframe j+2 may be "0100000". The terminal device may determine that a transmission unit 2 in the (j+1)$^{th}$ subframe is reallocated, and therefore determine that transmission units 3 and 4 are used to transmit the first downlink data channel.

Optionally, in manner 3, after successfully detecting the at least one piece of post-scheduling indication information, the terminal device may determine, according to M×q pieces of occupation indication information included in first post-scheduling indication information, which time-frequency unit in M×q time-frequency resource units that include M time domain units and q frequency domain units and that are occupied by the downlink signal is used to transmit the first downlink data channel. One frequency domain unit may be one resource block or one resource block group. For example, the first post-scheduling indication information may include a bitmap, and a bit included in the bitmap may correspond to the foregoing occupation indication information. It is assumed that "1" indicates being used for transmitting the first downlink data channel, and "0" indicates not being used for transmitting the first downlink data channel.

Optionally, in manner 3, it is assumed that "1" indicates being used for transmitting the first downlink data channel, and "0" indicates not being used for transmitting the first downlink data channel. If all bits in the bitmap are "1", the first post-scheduling indication information indicates that a resource occupied by the first downlink data channel in a first time period is all time domain resources and/or frequency domain resources in the downlink signal received by the terminal device. If all bits in the bitmap are "0", the first post-scheduling indication information indicates that the downlink signal received by the terminal device in the first time period does not include the resource occupied by the first downlink data channel.

It should be noted that, in the implementation descriptions of the present invention, that transmission of the first data channel is completed means that the network device stops sending the first data channel, and the terminal device stops receiving the first data channel. Correspondingly, that transmission of the first data channel is not completed means that the network device may continue sending the first data channel, and the terminal device may continue receiving the first data channel. That the terminal device determines whether transmission of the first data channel is completed means that the terminal device determines whether to continue receiving the first data channel.

It should be noted that, a specific manner of the foregoing manners to be used by the terminal device may be configured by the network device or may be agreed upon.

Optionally, in this embodiment of the present invention, post-scheduling indication information that is in the at least one piece of post-scheduling indication information and that is used by the terminal device to determine that transmission of the first downlink data channel is completed may include at least one of the following information:

1. Data indication information used to indicate whether the current downlink data transmission is initial transmission or retransmission.
2. Information bit quantity and code rate of a transport block in the current downlink data transmission, where the information may be specifically a transport block size (TBS, transport block size) sequence number.
3. Redundancy version. Specifically, if incremental redundancy is performed on a HARQ, a redundancy version number needs to be sent, so that a user can leam, during decoding, a location of a received signal in a decoding soft buffer (soft buffer).
4. Related information of hybrid automatic repeat request (Hybrid Automatic Repeat Request, HARQ) feedback information to be sent by the terminal device. For the related information of the feedback information, refer to the foregoing related descriptions of the first pre-scheduling indication information. For brevity, details are not described in this embodiment of the present invention.
5. Modulation and coding scheme index (Modulation and coded scheme index, MCS index).

It should be noted that, in manner 1 and manner 2, the post-scheduling indication information used by the terminal device to determine that transmission of the first downlink data channel is completed includes at least one of the following two types of information:

1. Corresponding to the first pre-scheduling indication information (including a same or corresponding identifier, where the identifier may be an ID or a network identifier, for example, scrambling is performed by using a same scrambling code).
2. Including an end identifier.

In manner 3, when the terminal device determines, according to post-scheduling indication information before the first post-scheduling indication information, that transmission of the first downlink data channel is not completed, and determines, according to the first post-scheduling indication information and the post-scheduling indication information before the first post-scheduling indication information, that transmission of the first downlink data channel is completed, the first post-scheduling indication may be a last piece of post-scheduling indication information corresponding to the first pre-scheduling indication information, and the first post-scheduling indication information is used by the terminal device to determine that transmission of the first downlink data channel is completed. In other words, the terminal device may determine, according to the first post-scheduling indication information, that transmission of the first downlink data channel is completed.

Optionally, in this embodiment of the present invention, the downlink signal sent by the network device may include second pre-scheduling indication information (new pre-scheduling indication information), and the second pre-scheduling indication information may be used to instruct the terminal device to receive a second downlink data channel (a new downlink data channel). Therefore, the terminal device simultaneously detects the at least one piece of post-scheduling indication information and the second pre-scheduling indication information. The detecting the second pre-scheduling indication information may include the following two cases:

Case 1: After determining that transmission of the first downlink data channel is completed, the terminal device successfully detects the second pre-scheduling indication information.

The terminal device determines that transmission of the first downlink data channel is completed. The terminal device may determine, according to the second pre-scheduling indication information, a time domain resource occupied by the second downlink data channel, and obtain the second downlink data channel. For a manner in which the terminal device determines the time domain resource occupied by the second downlink data channel, refer to the foregoing manner in which the terminal device determines the time domain resource occupied by the first downlink data channel. For brevity, details are not described herein again.

Case 2: Before determining that transmission of the first downlink data channel is completed, the terminal device successfully detects the second pre-scheduling indication information. In this case, the second pre-scheduling indication information may include at least one of the following two manners:

Manner 1

The second scheduling indication information is used to instruct the terminal device to receive the second downlink data channel, and a frequency domain resource occupied by the second downlink data channel is the same as the frequency domain resource occupied by the first downlink data channel. When the terminal device determines that detection on post-scheduling indication information is missed (if the terminal device has determined a time-frequency resource for sending feedback information), the terminal device may feed back, to the network device at a corresponding time-frequency location, NACK information corresponding to the first downlink data channel, so that the network device retransmits the first downlink data channel. In another case, the communications standard specifies that the network device does not schedule transmission of the second downlink data channel before transmission of the first downlink data channel is completed. In this case, when the terminal device determines that detection on post-scheduling indication information is missed (if the terminal device has determined a time-frequency resource for sending feedback information), the terminal device may feed back, to the network device at a corresponding time-frequency location, NACK information corresponding to the first downlink data channel, so that the network device retransmits the first downlink data channel.

Therefore, if the terminal device fails to detect the first post-scheduling indication information that can be used by the terminal device to determine that transmission of the first downlink data channel is completed, or the terminal device determines, according to the at least one piece of successfully detected post-scheduling indication information, that the size of the time domain resource occupied by the downlink data channel in the received downlink signal does not meet an indication of pre-scheduling indication information, the terminal device first successfully detects one piece of second pre-scheduling indication information, and the terminal device may determine that the terminal device misses detecting post-scheduling indication information. Optionally, if the terminal device has determined the time-frequency resource for sending the feedback information, the terminal device may feed back, to the network device at the corresponding time-frequency location, the NACK information corresponding to the first downlink data channel, and continue detecting scheduling indication information used by the network device to schedule retransmission of the first downlink data channel. Optionally, after determining that detection on post-scheduling indication information is missed, the terminal device may clear a current received signal buffer or re-detect post-scheduling indication information in a buffered signal. In this way, data obtained during two consecutive times of scheduling is not obfuscated, and therefore performance of demodulating and decoding a received signal is not damaged.

Manner 2

The second scheduling indication information is used to instruct the terminal device to receive the second downlink data channel. If the communications standard does not explicitly prohibit the network device from scheduling transmission of the second downlink data channel before transmission of the first downlink data channel is completed, or the communications standard explicitly specifies that the network device may schedule transmission of the second downlink data channel before transmission of the first downlink data channel is completed, and the terminal device determines that a frequency domain resource occupied by the second downlink data channel is different from the frequency domain resource occupied by the first downlink data channel, the terminal device continues detecting post-scheduling indication information corresponding to the first pre-scheduling indication information, and the terminal device detects post-scheduling indication information corresponding to the second pre-scheduling indication information.

Optionally, when the terminal device successfully detects the second pre-scheduling indication information but fails to detect the first post-scheduling indication information, the terminal device determines that detection on post-scheduling indication information is missed; and/or when the time domain resource size indicated by the first pre-scheduling indication information is not equal to the size that is of the time domain resource occupied by the first downlink data channel and that is determined by the terminal device according to the at least one piece of successfully detected post-scheduling indication information or a difference between the two is greater than a specified threshold (for example, the first pre-scheduling indication information indicates that the first downlink data channel occupies six time domain units, but the terminal device determines, according to the at least one piece of successfully detected post-scheduling indication information, that only four time domain units are obtained before the second pre-scheduling indication information is successfully detected), the terminal device determines that detection on post-scheduling indication information is missed. If the terminal device has determined a time-frequency resource for sending feedback information, the terminal device may feed back, to the network device at a corresponding time-frequency location, NACK information corresponding to the first downlink data channel, and continue detecting scheduling indication information used by the network device to schedule retransmission of the first downlink data channel. Optionally, after determining that detection on post-scheduling indication information is missed, the terminal device may clear a current received signal buffer or re-detect post-scheduling indication information in a buffered signal. In this way, data obtained during two consecutive times of scheduling is not obfuscated, and therefore performance of demodulating and decoding a received signal is not damaged.

Optionally, in this embodiment of the present invention, because the terminal device continues receiving the downlink signal after receiving the "first pre-scheduling indication information", the standard may specify a maximum buffer (buffer) used by the terminal device to receive the downlink signal.

In one case, a size of the buffer is specified. After the downlink signal received by the terminal device reaches the specified size of the buffer, it is determined that the buffer overflows.

In another case, it is specified that after continuously performing receiving in several time domain units (for example, subframes, slots, mini slots, or OFDM symbols) in specified bandwidth (for example, bandwidth corresponding to 100 resource blocks), or continuously performing receiving in several time domain scheduling units, the terminal device determines that the buffer overflows.

In still another case, a quantity of equivalent REs is specified as a definition of the buffer, and the terminal device determines, based on a quantity of continuously received REs, that the buffer overflows.

Optionally, the method in this embodiment of the present invention further includes: the terminal device reports a buffer capability of the terminal device to the network device. After determining that the receive buffer of the terminal device overflows, if the terminal device still does not reach the "detection start location of post-scheduling indication information", or fails to detect "post-scheduling indication information", the terminal device discards all data in the buffer, and restarts detecting the second pre-scheduling indication information.

The foregoing describes the downlink resource scheduling method in the embodiments of the present invention, and the following describes another downlink resource scheduling method 200 in the embodiments of the present invention.

It should be noted that, a network device in the method 200 and the network device in the method 100 may be a same network device or may be different network devices, and this is not limited herein in the present invention. Likewise, a terminal device in the method 200 and the terminal device in the method 100 may be a same terminal device or may be different terminal devices, and this is not limited herein in the present invention.

S210. A network device determines to indicate, by using a target indication mode in a plurality of indication modes, a time domain resource and/or a frequency domain resource allocated by the network device to a first downlink data channel of a terminal device.

S220. The terminal device determines to detect, by using a target detection mode corresponding to the target indication mode, scheduling indication information sent by the network device by using the target indication mode.

The plurality of indication modes include a first indication mode, the first indication mode is a mode in which pre-scheduling indication information indicates a start/end time domain resource and/or a start/end frequency domain resource, and a first detection mode corresponding to the first indication mode is a mode in which the terminal device detects pre-scheduling indication information.

The plurality of indication modes include a second indication mode, the second indication mode is a mode in which pre-scheduling indication information indicates a start/end time domain resource and/or a start/end frequency domain resource and post-scheduling indication information that is located after the pre-scheduling indication information in time domain indicates a time domain resource and/or a frequency domain resource occupied by a downlink data channel in the start/end time domain resource (or a mode in which the post-scheduling indication information indicates a time domain resource and/or a frequency domain resource that are/is reallocated in the start/end time domain resource), and a second detection mode corresponding to the second indication mode is a mode in which the terminal device detects pre-scheduling indication information and detects post-scheduling indication information at a specified location corresponding to the pre-scheduling indication information.

The plurality of indication modes include a third indication mode, the third indication mode is a mode in which pre-scheduling indication information instructs the terminal device to start to receive a downlink data channel and post-scheduling indication information after the pre-scheduling indication information is used to indicate a resource occupied by the downlink data channel of the terminal device in a downlink signal received by the terminal device (or a mode in which the post-scheduling indication information indicates a time domain resource and/or a frequency domain resource that are/is reallocated in the start-end time domain resource), and a third detection mode corresponding to the third indication mode is a mode in which the terminal device detects pre-scheduling indication information and post-scheduling indication information.

A manner in which the network device determines the target indication mode and the terminal device determines the target detection mode may include at least one of the following mode enabling manners:

1. The network device defines a period, that is, the network device and the terminal device each have a timer (timer). The configuration may be configured for each user by using terminal device-specific (UE-specific) higher layer signaling. The network device starts the timer after determining that the terminal device correctly receives a configuration instruction, and the terminal device starts the timer after sending a message for determining that the configuration instruction is correctly received. The mode configuration takes effect when the timer expires (expire). In other words, the network device may send, to the terminal device, higher layer signaling that is used to indicate a value of the timer, so that the network device and the terminal device can enable a corresponding mode when the timer expires.

2. The network device preconfigures a mode for the terminal device by using terminal device-specific (UE-specific) or group-specific (Group-specific) higher layer signaling. Then, mode enabling is triggered by using dedicated trigger signaling (higher layer signaling, Media Access Control layer signaling, or physical layer signaling), or a mode is switched to another mode.

Optionally, the method 200 may further include: S230. The network device may send, to the terminal device, mode higher layer signaling used to indicate the target indication mode, and correspondingly, after receiving the mode higher layer signaling, the terminal device may determine to detect the scheduling indication information by using the target detection mode corresponding to the target indication mode.

The first detection mode may be specifically as follows: The terminal device detects only pre-scheduling indication information, where the pre-scheduling indication information includes a frequency domain resource location, a time domain resource start location, and a time domain resource end location that are used for scheduling the terminal device, the time domain end location is determined, and all data channels carried on frequency domain resources allocated to the terminal device from the start location to the end location belong to the terminal device. In this mode, no post-scheduling indication information is sent. (The terminal device detects only the pre-scheduling indication information, the end location is fixed, and all received signals belong to the terminal device.)

Optionally, the mode higher layer signaling may include:

1. a period for detecting pre-scheduling indication information; and

2. a time domain scheduling unit used for scheduling a time domain resource.

It should be noted that, the period for detecting pre-scheduling indication information and the time domain scheduling unit may be the same or may be different, and may be an OFDM symbol, a mini slot (mini slot), a slot, or a subframe. If a standard specifies that the period and the time domain scheduling unit are the same, the network device needs to configure only one of the two in a configuration process.

The second detection mode may be specifically as follows: The terminal device detects pre-scheduling indication information, where the pre-scheduling indication information includes a frequency domain resource location, a time domain resource start location, and a time domain resource end location that are used for scheduling the terminal device; and the terminal device detects post-scheduling indication information at the end location or a specified middle location and the end location, where the time domain end location is determined, and the post-scheduling indication information includes at least information indicating which time-frequency resource is not allocated to the terminal device or which time-frequency resource is allocated to the terminal device from the time domain resource start location to the time domain resource end location. (The terminal device detects pre-scheduling indication information and detects (detect) post-scheduling indication information at a specified location corresponding to the pre-scheduling indication information, and a downlink signal received by the terminal device may include a downlink data channel of another terminal device.)

Optionally, the mode higher layer signaling may include:

1. a period for detecting pre-scheduling indication information;

2. a time domain scheduling unit used for scheduling a time domain resource; and

3. a period for detecting post-scheduling indication information.

3a. In one case, the terminal device fixedly detects post-scheduling indication information at a specified location of a last time domain scheduling unit in an allocated time domain resource. In this case, this piece of information is not required.

3b. In another case, the terminal device detects, by using a fixed period starting from a start time domain scheduling unit, post-scheduling indication information at a specified location of a last time domain scheduling unit in each period. In this case, this piece of information is required.

The period for detecting pre-scheduling indication information, the time domain scheduling unit used for scheduling a time domain resource, and the period for detecting post-scheduling indication information may explicitly exist in signaling configured by the network device for the terminal device, or may be specified in the standard in advance. The terminal device using this mode uses a fixed detection period and a fixed time domain resource scheduling unit.

The third detection mode may be specifically as follows: The terminal device detects pre-scheduling indication information, where the pre-scheduling indication information is used to instruct the terminal device to receive a downlink data channel of the terminal device, and the pre-scheduling indication information may further include at least one of a frequency domain resource location and a time domain resource start location that are used for scheduling the terminal device, and a detection start location of post-scheduling indication information; and the terminal device starts to detect post-scheduling indication information at the detection start location of post-scheduling indication information, and determines an end location according to the post-scheduling indication information, where the post-scheduling indication information includes at least information indicating which time-frequency resource is not allocated to the terminal device or which time-frequency resource is allocated to the terminal device from the time domain start location (a time domain location at which the terminal device starts to receive a downlink signal) to the time domain end location (a time domain location at which transmission of the downlink data channel is completed) (or the post-scheduling indication information includes information indicating which time domain resource is reallocated in time domain resources allocated to the terminal device from the time domain resource start location to the time domain resource end location). (The terminal device detects pre-scheduling indication information and post-scheduling indication information, and a received signal is possibly not to be sent to the terminal device.)

Optionally, the mode higher layer signaling may include:

1. a period for detecting pre-scheduling indication information;
2. a time domain scheduling unit used for scheduling a time domain resource; and
3. a period for detecting post-scheduling indication information.

The terminal device obtains the "detection start location of post-scheduling indication information" from a first piece of pre-scheduling indication information, and starts to perform detection at the location by using the "period for detecting post-scheduling indication information". It should be noted that, different from mode 2, in mode 3, a location of post-scheduling indication information is dynamic, and the terminal device needs to obtain post-scheduling indication information through detection.

The two periods and the time domain scheduling unit may be the same or may be different, and may be one or more OFDM symbols, one or more mini slots (mini slots), one slot, or one subframe. If a standard specifies that any two or all of the two periods and the time domain scheduling unit are the same, an eNB needs to configure only the different one or only one of the three in a configuration process.

The period for detecting pre-scheduling indication information, the time domain scheduling unit used for scheduling a time domain resource, and the period for detecting post-scheduling indication information may explicitly exist in signaling configured by the base station for the terminal device, or may be specified in the standard in advance. The terminal device using this mode uses a fixed detection period and a fixed time domain scheduling unit.

It should be noted that, the third detection mode corresponds to the foregoing three manners of post-scheduling indication information. For related descriptions of the third detection mode, refer to the related descriptions of the foregoing communication method 100. For brevity, details are not described herein again.

It should be noted that, the terminal device and the network device may use different modes at different frequency domain locations. For example, the network device uses the first indication mode at a first frequency domain location, uses the second indication information at a second frequency domain location, and uses the third indication mode at a third frequency domain location. Correspondingly, the terminal device uses the first detection mode at the first frequency domain location, uses the second detection mode at the second frequency domain location, and uses the third detection mode at the third frequency domain location.

It should be noted that, mutual reference may be made to the embodiments of the present invention if they are not mutually exclusive.

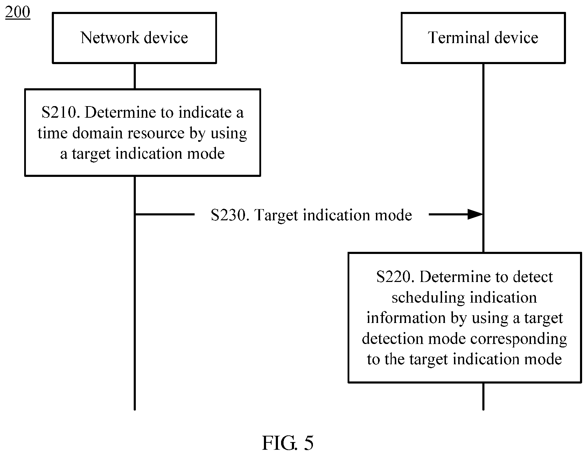

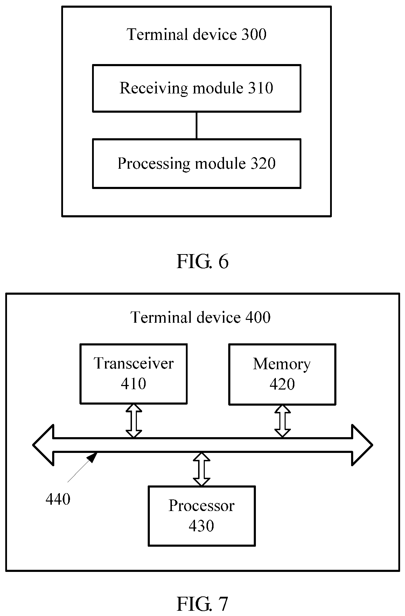

The foregoing describes the downlink resource scheduling method in the embodiments of the present invention with reference to FIG. 1 to FIG. 5, and the following describes a terminal device and a network device in the embodiments of the present invention with reference to FIG. 6 to FIG. 9.

FIG. 6 is a schematic block diagram of an example of a terminal device according to an embodiment of the present invention. As shown in FIG. 6, the terminal device 300 includes:

a receiving module 310, where the receiving module 310 is configured to:

receive first pre-scheduling indication information sent by a network device, where the first pre-scheduling indication information is used to instruct the receiving module 310 to receive a first downlink data channel; and

receive, according to the first pre-scheduling indication information, a downlink signal sent by the network device, where the downlink signal sent by the network device includes the first downlink data channel; and

a processing module 320, configured to detect at least one piece of post-scheduling indication information in the downlink signal sent by the network device, where the at least one piece of post-scheduling indication information is used by the processing module 320 to determine a time domain resource occupied by the first downlink data channel in the received downlink signal.

Optionally, the at least one piece of post-scheduling indication information includes first post-scheduling indication information corresponding to the first pre-scheduling indication information, the first post-scheduling indication information is used to indicate a time domain resource occupied, in a first time period, by the first downlink data channel in the downlink signal received by the receiving module 310, the first time period is a time period from a moment at which the receiving module 310 receives the downlink signal sent by the network device to a moment at which the receiving module 310 successfully detects the first post-scheduling indication information, and the first post-scheduling indication information is further used to indicate that transmission of the first downlink data channel is completed.

Optionally, the first post-scheduling indication information includes N pieces of occupation indication information, the N pieces of occupation indication information are in a one-to-one correspondence with N time domain units occupied by the downlink signal received by the receiving module 310, and each piece of occupation indication information is used to indicate whether a corresponding time domain unit is used to transmit the first downlink data channel.

Optionally, the first post-scheduling indication information includes $N \times q$ pieces of occupation indication information, the $N \times q$ pieces of occupation indication information are in a one-to-one correspondence with $N \times q$ time-frequency resource units that include N time domain units and q frequency domain units and that are occupied by the downlink signal received by the receiving module 310, and each piece of occupation indication information is used to indicate whether a corresponding time-frequency resource unit is used to transmit the first downlink data channel.

Optionally, the first pre-scheduling indication information is further used to indicate a start detection location at which the receiving module 310 detects the first post-scheduling indication information.

Optionally, a $j^{th}$ piece of post-scheduling indication information in the at least one piece of post-scheduling indication information is located at a preset location of a $(j+1)^{th}$ time domain scheduling unit occupied by the downlink signal received by the receiving module 310, and the $j^{th}$ piece of post-scheduling indication information is used by the processing module 320 to determine a time domain resource and/or a frequency domain resource occupied, in a $j^{th}$ time domain scheduling unit, by the first downlink data channel in the received downlink signal, where $j \geq 1$.

Optionally, a $j^{th}$ piece of post-scheduling indication information in the at least one piece of post-scheduling indication information is located at a preset location of a $j^{th}$ time domain scheduling unit occupied by the downlink signal received by the receiving module 310, and the $j^{th}$ piece of post-scheduling indication information is used by the processing module 320 to determine a time domain resource and/or a frequency domain resource occupied, in the $j^{th}$ time domain scheduling unit, by the first downlink data channel in the received downlink signal, where $j \geq 1$.

Optionally, the at least one piece of post-scheduling indication information includes first post-scheduling indication information corresponding to the first pre-scheduling indication information, the first post-scheduling indication information is used to indicate that transmission of the first downlink data channel is completed, and the first post-scheduling indication information is a last piece of post-scheduling indication information in the at least one piece of post-scheduling indication information.

Optionally, the first pre-scheduling indication information is used to indicate a size of a time domain resource allocated by the network device to the first downlink data channel.

The processing module 320 is further configured to determine, based on the time domain resource size indicated by the first pre-scheduling indication information and a size of the time domain resource that is occupied by the first downlink data channel and that is determined according to the at least one piece of post-scheduling indication information, whether transmission of the first downlink data channel is completed.

When the processing module 320 determines that transmission of the first downlink data channel is not completed, the receiving module 310 is further configured to continue detecting post-scheduling indication information.

Optionally, the $j^{th}$ piece of post-scheduling indication information includes M pieces of occupation indication information, the M pieces of occupation indication information are in a one-to-one correspondence with M time domain units included in the $j^{th}$ time domain scheduling unit, and each piece of occupation indication information is used to indicate whether a corresponding time domain unit is used to transmit the first downlink data channel.

Optionally, the $j^{th}$ piece of post-scheduling indication information includes $M \times q$ pieces of occupation indication information, the $M \times q$ pieces of occupation indication information are in a one-to-one correspondence with M×q time-frequency resource units that include M time domain units and q frequency domain units and that are included in the j$^{th}$ time domain scheduling unit, and each piece of occupation indication information is used to indicate whether a corresponding time-frequency resource unit is used to transmit the first downlink data channel.

Optionally, the receiving module 310 is further configured to detect second pre-scheduling indication information in the downlink signal sent by the network device, where the second pre-scheduling indication information is used to instruct the receiving module 310 to receive a second downlink data channel.

Optionally, post-scheduling indication information that is in the at least one piece of post-scheduling indication information and that is used by the processing module 320 to determine that transmission of the downlink data is completed is used to instruct the sending module 310 to send a hybrid automatic repeat request HARQ time domain resource.

It should be understood that the terminal device 300 herein is represented in a form of a function module. The term "module" herein may be an application-specific integrated circuit (Application-Specific Integrated Circuit, ASIC), an electronic circuit, a processor (for example, a shared processor, a dedicated processor, or a group processor) configured to execute one or more software or firmware programs and a memory, a combinational logic circuit, and/or another proper component supporting the described functions. In an optional example, a person skilled in the art may understand that the terminal device 300 may be specifically the terminal device in the foregoing embodiment, and the terminal device 300 may be configured to perform procedures and/or steps corresponding to the terminal device in the foregoing method embodiment. To avoid repetition, details are not described herein again.

It should be noted that, the receiving module 310 may correspond to a transceiver 410, and the processing module 320 may correspond to a processor 430. FIG. 7 is a schematic block diagram of another example of a terminal device according to an embodiment of the present invention. As shown in FIG. 7, the terminal device 400 includes:

a transceiver 410, a memory 420, and a processor 430. Optionally, the terminal device 400 further includes a bus system 440 that interconnects the processor 430, the memory 420, and the transceiver 410. The memory 420 is configured to store an instruction. The processor 430 is configured to execute the instruction stored in the memory 420, to control the transceiver 410 to perform the following operations: receiving first pre-scheduling indication information sent by a network device, where the first pre-scheduling indication information is used to instruct the terminal device to receive a first downlink data channel; receiving, according to the first pre-scheduling indication information, a downlink signal sent by the network device, where the downlink signal sent by the network device includes the first downlink data channel; and detecting at least one piece of post-scheduling indication information in the downlink signal sent by the network device, where the at least one piece of post-scheduling indication information is used by the processor 430 to determine a time domain resource occupied by the first downlink data channel in the received downlink signal (that is, the processor 430 is further configured to determine, according to the at least one piece of post-scheduling indication information, the time domain resource occupied by the first downlink data channel in the received downlink signal).

It should be understood that, the terminal device 400 may be specifically the terminal device in the foregoing embodiment, and may be configured to perform steps and/or procedures corresponding to the terminal device in the foregoing method embodiment. Optionally, the memory 420 may include a read-only memory and a random access memory, and provide an instruction and data for the processor. A part of the memory may further include a non-volatile random access memory. For example, the memory may further store device type information. The processor 430 may be configured to execute the instruction stored in the memory, and when the processor executes the instruction, the processor may perform steps corresponding to the network device in the foregoing method embodiment.

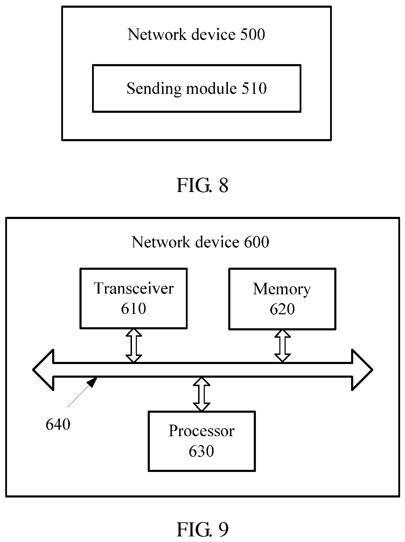

FIG. 8 is a schematic block diagram of an example of a network device according to an embodiment of the present invention. As shown in FIG. 8, the network device 500 includes:

a sending module 510, where the sending module 510 is configured to:

send the first pre-scheduling indication information to a terminal device, where the first pre-scheduling indication information is used to instruct the terminal device to receive a first downlink data channel; and send a downlink signal to the terminal device, where the downlink signal includes the first downlink data channel and at least one piece of post-scheduling indication information, and the at least one piece of post-scheduling indication information is used by the terminal device to determine a time domain resource occupied by the first downlink data channel in the received downlink signal.

Optionally, the at least one piece of post-scheduling indication information includes first post-scheduling indication information corresponding to the first pre-scheduling indication information, the first post-scheduling indication information is used to indicate a time domain resource and/or a frequency domain resource occupied, in a first time period, by the first downlink data channel in the downlink signal sent by the sending module 510, the first time period is a time period from a moment at which the sending module 510 sends the downlink signal to a moment at which the sending module 510 sends the first post-scheduling indication information, and the first post-scheduling indication information is further used to indicate that transmission of the first downlink data channel is completed.

Optionally, the first post-scheduling indication information includes N pieces of occupation indication information, the N pieces of occupation indication information are in a one-to-one correspondence with N time domain units occupied by the downlink signal sent by the sending module 510, and each piece of occupation indication information is used to indicate whether a corresponding time domain unit is used to transmit the first downlink data channel.

Optionally, the first post-scheduling indication information includes $N \times q$ pieces of occupation indication information, the $N \times q$ pieces of occupation indication information are in a one-to-one correspondence with $N \times q$ time-frequency resource units that include N time domain units and q frequency domain units and that are occupied by the downlink signal sent by the sending module 510, and each piece of occupation indication information is used to indicate whether a corresponding time domain unit is used to transmit the first downlink data channel.

Optionally, the first pre-scheduling indication information is further used to indicate a start detection location at which the terminal device detects the first post-scheduling indication information.

Optionally, a $j^{th}$ piece of post-scheduling indication information in the at least one piece of post-scheduling indication information is located at a preset location of a $(j+1)^{th}$ time domain scheduling unit occupied by the downlink signal received by the terminal device, and the $j^{th}$ piece of post-scheduling indication information is used by the terminal device to determine a time domain resource and/or a frequency domain resource occupied, in a $j^{th}$ time domain scheduling unit, by the first downlink data channel in the received downlink signal, where $j \geq 1$.

Optionally, a $j^{th}$ piece of post-scheduling indication information in the at least one piece of post-scheduling indication information is located at a preset location of a $j^{th}$ time domain scheduling unit occupied by the downlink signal received by the terminal device, and the $j^{th}$ piece of post-scheduling indication information is used by the terminal device to determine a time domain resource and/or a frequency domain resource occupied, in the $j^{th}$ time domain scheduling unit, by the first downlink data channel in the received downlink signal, where $j \geq 1$.

Optionally, the at least one piece of post-scheduling indication information includes first post-scheduling indication information corresponding to the first pre-scheduling indication information, the first post-scheduling indication information is used to indicate that transmission of the first downlink data channel is completed, and the first post-scheduling indication information is a last piece of post-scheduling indication information in the at least one piece of post-scheduling indication information.

Optionally, the first pre-scheduling indication information is used to indicate a size of a time domain resource allocated by the processing module included in the network device to the first downlink data channel, so that the terminal device determines, based on the time domain resource size indicated by the first pre-scheduling indication information and a size of the time domain resource that is occupied by the first downlink data channel and that is determined by the terminal device according to the at least one piece of post-scheduling indication information, whether transmission of the first downlink data channel is completed.

Optionally, the $j^{th}$ piece of post-scheduling indication information includes M pieces of occupation indication information, the M pieces of occupation indication information are in a one-to-one correspondence with M time domain units included in the $j^{th}$ time domain scheduling unit, and each piece of occupation indication information is used to indicate whether a corresponding time domain unit is used to transmit the first downlink data channel.

Optionally, the $j^{th}$ piece of post-scheduling indication information includes $M \times q$ pieces of occupation indication information, the $M \times q$ pieces of occupation indication information are in a one-to-one correspondence with $M \times q$ time-frequency resource units that include M time domain units and q frequency domain units and that are included in the $j^{th}$ time domain scheduling unit, and each piece of occupation indication information is used to indicate whether a corresponding time domain unit is used to transmit the first downlink data channel.

Optionally, the downlink signal further includes second pre-scheduling indication information, and the second pre-scheduling indication information is used to instruct the terminal device to receive a second downlink data channel.

Optionally, post-scheduling indication information that is in the at least one piece of post-scheduling indication information and that is used by the terminal device to determine that transmission of the downlink data is completed is used to instruct the terminal device to send a hybrid automatic repeat request HARQ time domain resource.

It should be understood that the network device 500 herein is represented in a form of a function module. The term "module" herein may be an application-specific integrated circuit (Application-Specific Integrated Circuit, ASIC), an electronic circuit, a processor (for example, a shared processor, a dedicated processor, or a group processor) configured to execute one or more software or firmware programs and a memory, a combinational logic circuit, and/or another proper component supporting the described functions. In an optional example, a person skilled in the art may understand that the network device 500 may be specifically the network device in the foregoing embodiment, and the network device 500 may be configured to perform procedures and/or steps corresponding to the terminal device in the foregoing method embodiment. To avoid repetition, details are not described herein again.

It should be noted that, the sending module 510 may correspond to a transceiver 610, and the transceiver 610 may implement various functions of the sending module 510. FIG. 9 is a schematic block diagram of another example of a network device according to an embodiment of the present invention. As shown in FIG. 9, the network device 600 includes:
a transceiver 610, a memory 620, and a processor 630. Optionally, the terminal device 600 further includes a bus system 640 that interconnects the processor 630, the memory 620, and the transceiver 610. The memory 620 is configured to store an instruction. The processor 630 is configured to execute the instruction stored in the memory 620, to control the transceiver 610 to perform the following operations:

> sending the first pre-scheduling indication information to a terminal device, where the first pre-scheduling indication information is used to instruct the terminal device to receive a first downlink data channel; and
> sending a downlink signal to the terminal device, where the downlink signal includes the first downlink data channel and at least one piece of post-scheduling indication information, and the at least one piece of post-scheduling indication information is used by the terminal device to determine a time domain resource occupied by the first downlink data channel in the received downlink signal. For specific descriptions of the processor 630 and the transceiver 610, refer to the related descriptions of the foregoing function modules. For brevity, details are not described herein again.

It should be understood that, the network device 600 may be specifically the network device in the foregoing embodiment, and may be configured to perform steps and/or procedures corresponding to the network device in the foregoing method embodiment. Optionally, the memory 620 may include a read-only memory and a random access memory, and provide an instruction and data for the processor. A part of the memory may further include a non-volatile random access memory. For example, the memory may further store device type information. The processor 630 may be configured to execute the instruction stored in the memory, and when the processor executes the instruction, the processor 630 may perform steps corresponding to the network device in the foregoing method embodiment.

In this embodiment of the present invention, the processor may be a central processing unit (English: central processing unit, CPU), a network processor (network processor, NP), or a combination of a CPU and an NP. The processor may further include a hardware chip. The foregoing hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD for short), a field-programmable gate array (field-programmable gate array, FPGA), a generic array logic (generic array logic, GAL), or any combination thereof.

The transceiver can implement communication between a mobile terminal device and another device or a communications network.

The memory may include a read-only memory and a random access memory, and provide an instruction and data for the processor. A part of the processor may further include a non-volatile random access memory. For example, the processor may further store device type information.

The bus system may include a power bus, a control bus, a status signal bus, and the like in addition to a data bus. For ease of indication, the bus system is indicated by using only one bold line in the figure. However, it does not indicate that there is only one bus or only one type of bus.

It should be understood that in the embodiments of the present invention, "B corresponding to A" indicates that B is associated with A, and B may be determined according to A. However, it should further be understood that determining B according to A does not mean that B is determined according to A only; that is, B may also be determined according to A and/or other information. It should be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should further be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

It may be clearly understood by a person skilled in the art that, for the purpose of convenient and brief description, for a detailed working process of the system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

It may be understood that for conciseness and clarity of this application document, a technical feature and a description in one of the embodiments is applicable to other embodiments. For example, a technical feature of the method embodiment is applicable to the apparatus embodiment or another method embodiment, and details are not described in other embodiments again.

When the functions are implemented in a form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The descriptions are only specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A method for obtaining a downlink scheduling resource by a terminal device, wherein the method comprises:

   receiving (S110) first pre-scheduling indication information sent by a network device, wherein the first pre-scheduling indication information is used to instruct the terminal device to receive a first downlink data channel;
   receiving (S120), according to the first pre-scheduling indication information, a downlink signal sent by the network device, wherein the downlink signal sent by the network device comprises the first downlink data channel; and
   detecting (S130) at least one piece of post-scheduling indication information in the downlink signal sent by the network device, wherein the at least one piece of post-scheduling indication information is used by the terminal device to determine a resource occupied by the first downlink data channel in the received downlink signal;
   wherein the at least one piece of post-scheduling indication information comprises first post-scheduling indication information corresponding to the first pre-scheduling indication information;
   the first post-scheduling indication information is used to indicate a resource occupied, in a first time period, by the first downlink data channel in the downlink signal received by the terminal device, the first time period is a time period from a moment at which the terminal device receives the downlink signal sent by the network device to a moment at which the terminal device successfully detects the first post-scheduling indication information, and
   the first post-scheduling indication information is further used to indicate that transmission of the first downlink data channel is completed.

2. The method according to claim 1, wherein the method further comprises:

   receiving higher layer signaling, wherein the higher layer signaling comprises a first period for detecting pre-scheduling indication information and/or a second period for detecting post-scheduling indication information; and

the receiving (S110) first pre-scheduling indication information sent by a network device comprises: receiving, by detecting pre-scheduling indication information based on the first period, the first pre-scheduling indication information sent by the network device; and/or the detecting (S130) at least one piece of post-scheduling indication information in the downlink signal sent by the network device comprises: detecting the at least one piece of post-scheduling indication information based on the second period,

in particular wherein

the higher layer signaling further comprises a time domain scheduling unit used for resource scheduling.

3. The method according to claim 1, wherein the first post-scheduling indication information comprises N pieces of occupation indication information, the N pieces of occupation indication information are in a one-to-one correspondence with N time domain units occupied by the downlink signal received by the terminal device, and each piece of occupation indication information is used to indicate whether a corresponding time domain unit is used to transmit the first downlink data channel.

4. The method according to claim 1 or 3, wherein the first pre-scheduling indication information is further used to indicate a start detection location at which the terminal device detects the first post-scheduling indication information.

5. The method according to claim 1 or 2, wherein a jth piece of post-scheduling indication information in the at least one piece of post-scheduling indication information is located at a preset location of a (j+1)th time domain scheduling unit occupied by the downlink signal received by the terminal device, and the jth piece of post-scheduling indication information is used by the terminal device to determine a resource occupied, in a jth time domain scheduling unit, by the first downlink data channel in the received downlink signal, wherein $j \geq 1$.

6. The method according to claim 5, wherein the at least one piece of post-scheduling indication information comprises first post-scheduling indication information corresponding to the first pre-scheduling indication information, and the first post-scheduling indication information is used to indicate that transmission of the first downlink data channel is completed; and

the first post-scheduling indication information is a last piece of post-scheduling indication information in the at least one piece of post-scheduling indication information.

7. The method according to claim 5, wherein the first pre-scheduling indication information is used to indicate a size of a resource allocated by the network device to the first downlink data channel; and

the method further comprises:

determining, based on the resource size indicated by the first pre-scheduling indication information and a size of the resource that is occupied by the first downlink data channel and that is determined by the terminal device according to the at least one piece of post-scheduling indication information, whether transmission of the first downlink data channel is completed; and when it is determined that transmission of the first downlink data channel is not completed, continuing detecting post-scheduling indication information.

8. The method according to any one of claims 5 to 7, wherein the jth piece of post-scheduling indication information comprises M pieces of occupation indication information, the M pieces of occupation indication information are in a one-to-one correspondence with M time domain units comprised in the jth time domain scheduling unit, and each piece of occupation indication information is used by the terminal device to determine whether a corresponding time domain unit is used to transmit the first downlink data channel.

9. The method according to any one of claims 1 to 8, wherein the method further comprises:
detecting second pre-scheduling indication information in the downlink signal sent by the network device, wherein the second pre-scheduling indication information is used to instruct the terminal device to receive a second downlink data channel.

10. The method according to any one of claims 1 to 9, wherein post-scheduling indication information that is in the at least one piece of post-scheduling indication information and that is used by the terminal device to determine that transmission of the downlink data is completed is used to instruct the terminal device to send a hybrid automatic repeat request HARQ resource.

11. A method for scheduling a downlink resource by a network device, wherein the method comprises:

sending (S110) the first pre-scheduling indication information to a terminal device, wherein the first pre-scheduling indication information is used to instruct the terminal device to receive a first downlink data channel; and

sending (S120) a downlink signal to the terminal device, wherein the downlink signal comprises the first downlink data channel and at least one piece of post-scheduling indication information, and the at least one piece of post-scheduling indication information is used by the terminal device to determine a resource occupied by the first downlink data channel in the received downlink signal;

wherein the at least one piece of post-scheduling indication information comprises first post-scheduling indication information corresponding to the first pre-scheduling indication information;

the first post-scheduling indication information is used to indicate a resource occupied, in a first time period, by the first downlink data channel in the downlink signal sent by the network device, the first time period is a time period from a moment at which the network device sends the downlink signal to a moment at which the network device sends the first post-scheduling indication information, and

the first post-scheduling indication information is further used to indicate that transmission of the first downlink data channel is completed.

12. A terminal device, wherein the terminal device comprises:

a transceiver, a memory, and a processor, wherein the memory is configured to store an instruction, and the processor is configured to execute the instruction stored in the memory, to control the transceiver to perform the method of any one of claims 1 to 10.

13. A network device, wherein the network device comprises:

a transceiver, a memory, and a processor, wherein the memory is configured to store an instruction, and the processor is configured to execute the instruction stored in the memory, to control the transceiver to perform the method of claim 11.

14. A readable storage medium, wherein the readable storage medium stores a program, and when the program is executed, the method according to any one of claims 1 to 12 are performed.

**Patentansprüche**

1. Verfahren zum Erhalten einer Downlink-Planungsressource durch eine Endgerätevorrichtung, wobei das Verfahren Folgendes umfasst:

Empfangen (S110) von ersten Vorplanungsangabeinformationen, die von einer Netzwerkvorrichtung gesendet werden, wobei die ersten Vorplanungsangabeinformationen verwendet werden, um die Endgerätevorrichtung anzuweisen, einen ersten Downlink-Datenkanal zu empfangen;

Empfangen (S120) gemäß den ersten Vorplanungsangabeinformationen eines Downlink-Signals, das von der Netzwerkvorrichtung gesendet wird, wobei das Downlink-Signal, das von der Netzwerkvorrichtung gesendet wird, den ersten Downlink-Datenkanal umfasst; und

Detektieren (S130) von mindestens einem Teil von Nachplanungsangabeinformationen in dem Downlink-Signal, das von der Netzwerkvorrichtung gesendet wird, wobei der mindestens eine Teil von Nachplanungsangabeinformationen von der Endgerätevorrichtung verwendet wird, um eine Ressource zu bestimmen, die durch den ersten Downlink-Datenkanal in dem empfangenen Downlink-Signal belegt ist;

wobei der mindestens eine Teil von Nachplanungsangabeinformationen erste Nachplanungsangabeinformationen umfasst, die den ersten Vorplanungsangabeinformationen entsprechen;

wobei die ersten Nachplanungsangabeinformationen verwendet werden, um eine Ressource, die während einer ersten Zeitspanne von dem ersten Downlink-Datenkanal belegt wird, in dem Downlink-Signal anzugeben, das von der Endgerätevorrichtung empfangen wird, wobei es sich bei der ersten Zeitspanne um eine Zeitspanne von einem Moment, in dem die Endgerätevorrichtung das Downlink-Signal empfängt, das von der Netzwerkvorrichtung gesendet wird, bis zu einem Moment, in dem die Endgerätevorrichtung erfolgreich die ersten Nachplanungsangabeinformationen detektiert, handelt, und

wobei die ersten Nachplanungsangabeinformationen ferner verwendet werden, um anzugeben, dass eine Übertragung des ersten Downlink-Datenkanals abgeschlossen ist.

2. Verfahren nach Anspruch 1, wobei das Verfahren ferner Folgendes umfasst:

Empfangen einer Signalisierung höherer Schichten, wobei die Signalisierung höherer Schichten eine erste Zeitspanne zum Detektieren von Vorplanungsangabeinformationen und/oder eine zweite Zeitspanne zum Detektieren von Nachplanungsangabeinformationen umfasst; und

wobei das Empfangen (S110) der ersten Vorplanungsangabeinformationen, die von einer Netzwerkvorrichtung gesendet werden, Folgendes umfasst: Empfangen der ersten Vorplanungsangabeinformationen, die von der Netzwerkvorrichtung gesendet werden, durch ein Detektieren von Vorplanungsangabeinformationen auf Grundlage der ersten Zeitspanne; und/oder wobei das Detektieren (S130) des mindestens einen Teils der Nachplanungsangabeinformationen in dem Downlink-Signal, das von der Netzwerkvorrichtung gesendet wird, Folgendes umfasst: Detektieren des mindestens einen Teils der Nachplanungsangabeinformationen auf Grundlage der zweiten Zeitspanne,

insbesondere wobei

die Signalisierung höherer Schichten ferner eine Zeitdomänenplanungseinheit umfasst, die zur Ressourcenplanung verwendet wird.

3. Verfahren nach Anspruch 1, wobei die ersten Nachplanungsangabeinformationen N Teile von Belegungsangabeinformationen umfassen, wobei die N Teile von Belegungsangabeinformationen in einem Eins-zu-Eins-Entsprechungsverhältnis zu N Zeitdomäneneinheiten stehen, die von dem Downlink-Signal belegt werden, das von der Endgerätevorrichtung empfangen wird, und wobei jeder Teil der Belegungsangabeinformationen verwendet wird, um anzugeben, ob eine entsprechende Zeitdomäneneinheit verwendet wird, um den ersten Downlink-Datenkanal zu übertragen.

4. Verfahren nach Anspruch 1 oder 3, wobei die ersten Vorplanungsangabeinformationen ferner verwendet werden, um einen Startdetektionsstandort anzugeben, an dem die Endgerätevorrichtung die ersten Nachplanungsangabeinformationen detektiert.

5. Verfahren nach Anspruch 1 oder 2, wobei sich ein j-ter Teil von Nachplanungsangabeinformationen in dem mindestens einen Teil von Nachplanungsangabeinformationen an einem voreingestellten Standort einer (j+1)-ten Zeitdomänenplanungseinheit befindet, die von dem Downlink-Signal belegt wird, das von der Endgerätevorrichtung empfangen wird, und wobei der j-te Teil von Nachplanungsangabeinformationen von der Endgerätevorrichtung verwendet wird, um eine Ressource zu bestimmen, die in einer j-ten Zeitdomänenplanungseinheit von dem ersten Downlink-Datenkanal in dem empfangenen Downlink-Signal belegt wird, wobei j≥1.

6. Verfahren nach Anspruch 5, wobei der mindestens eine Teil von Nachplanungsangabeinformationen erste Nachplanungsangabeinformationen umfasst, die den ersten Vorplanungsangabeinformationen entsprechen, und wobei die ersten Vorplanungsangabeinformationen verwendet werden, um anzugeben, dass eine Übertragung des ersten Downlink-Datenkanals abgeschlossen ist; und

wobei es sich bei den ersten Nachplanungsangabeinformationen um einen letzten Teil von Nachplanungsangabeinformationen in dem mindestens einen Teil von Nachplanungsangabeinformationen handelt.

7. Verfahren nach Anspruch 5, wobei die ersten Vorplanungsangabeinformationen verwendet werden, um eine Größe einer Ressource anzugeben, die dem ersten Downlink-Datenkanal durch die Netzwerkvorrichtung zugewiesen ist; und

wobei das Verfahren ferner Folgendes umfasst:

Bestimmen auf Grundlage der Ressourcengröße, die durch die ersten Vorplanungsangabeinformationen angegeben ist, und einer Größe der Ressource, die von dem ersten Downlink-Datenkanal belegt wird, und die durch die Endgerätevorrichtung gemäß dem mindestens einen Teil von Nachplanungsangabeinformationen bestimmt wird, ob eine Übertragung des ersten Downlink-Datenkanals abgeschlossen ist; und wenn bestimmt wird, dass die Übertragung des ersten Downlink-Datenkanals nicht abgeschlossen ist, Fortfahren mit dem Detektieren von Nachplanungsangabeinformationen.

8. Verfahren nach einem der Ansprüche 5 bis 7, wobei der j-te Teil von Nachplanungsangabeinformationen M Teile von Belegungsangabeinformationen umfasst, wobei die M Teile von Belegungsangabeinformationen in einem Eins-zu-Eins-Entsprechungsverhältnis mit M Zeitdomäneneinheiten stehen, die in der j-ten Zeitdomänenplanungseinheit enthalten sind, und wobei jeder Teil von Belegungsangabeinformationen von der Endgerätevorrichtung verwendet wird, um zu bestimmen, ob eine entsprechende Zeitdomäneneinheit verwendet wird, um den ersten Downlink-Datenkanal zu übertragen.

9. Verfahren nach einem der Ansprüche 1 bis 8, wobei das Verfahren ferner Folgendes umfasst: Detektieren von zweiten Vorplanungsangabeinformationen in dem Downlink-Signal, das von der Netzwerkvorrichtung gesendet wird, wobei die zweiten Vorplanungsangabeinformationen verwendet werden, um die Endgerätevorrichtung anzuweisen, einen zweiten Downlink-Datenkanal zu empfangen.

10. Verfahren nach einem der Ansprüche 1 bis 9, wobei die Nachplanungsangabeinformationen, die in dem mindestens einen Teil von Nachplanungsangabeinformationen enthalten sind und die von der Endgerätevorrichtung verwendet werden, um zu bestimmen, dass die Übertragung der Downlink-Daten abgeschlossen ist, verwendet werden, um die Endgerätevorrichtung anzuweisen, eine Ressource einer hybriden automatischen Wiederholungsanforderung (HARQ) zu senden.

11. Verfahren zum Planen einer Downlink-Ressource durch eine Netzwerkvorrichtung, wobei das Verfahren Folgendes umfasst:

Senden (S110) der ersten Vorplanungsangabeinformationen an eine Endgerätevorrichtung, wobei die ersten Vorplanungsangabeinformationen verwendet werden, um die Endgerätevorrichtung anzuweisen, einen ersten Downlink-Datenkanal zu empfangen; und
Senden (S120) eines Downlink-Signals an die Endgerätevorrichtung, wobei das Downlink-Signal den ersten Downlink-Datenkanal und mindestens einen Teil von Nachplanungsangabeinformationen umfasst, und wobei der mindestens eine Teil von Nachplanungsangabeinformationen von der Endgerätevorrichtung verwendet wird, um eine Ressource zu bestimmen, die von dem ersten Downlink-Datenkanal in dem empfangenen Downlink-Signal belegt wird; wobei der mindestens eine Teil von Nachplanungsangabeinformationen erste Nachplanungsangabeinformationen umfasst, die den ersten Vorplanungsangabeinformationen entsprechen;
wobei die ersten Nachplanungsangabeinformationen verwendet werden, um eine Ressource anzugeben, die in einer ersten Zeitspanne von dem ersten Downlink-Datenkanal in dem Downlink-Signal, das von der Netzwerkvorrichtung gesendet wird, belegt wird, wobei es sich bei der ersten Zeitspanne um eine Zeitspanne von einem Moment, in dem die Netzwerkvorrichtung das Downlink-Signal sendet, bis zu einem Moment, in dem die Netzwerkvorrichtung die ersten Nachplanungsangabeinformationen sendet, handelt, und
wobei die ersten Nachplanungsangabeinformationen ferner verwendet werden, um anzugeben, dass eine Übertragung des ersten Downlink-Datenkanals abgeschlossen ist.

12. Endgerätevorrichtung, wobei die Endgerätevorrichtung Folgendes umfasst:
einen Sendeempfänger, einen Speicher und einen Prozessor, wobei der Speicher dazu konfiguriert ist, eine Anweisung zu speichern und der Prozessor dazu konfiguriert ist, die Anweisung auszuführen, die in dem Speicher gespeichert ist, um den Sendeempfänger zu steuern, um das Verfahren nach einem der Ansprüche 1 bis 10 durchzuführen.

13. Netzwerkvorrichtung, wobei die Netzwerkvorrichtung Folgendes umfasst:
einen Sendeempfänger, einen Speicher und einen Prozessor, wobei der Speicher dazu konfiguriert ist, eine Anweisung zu speichern und der Prozessor dazu konfiguriert ist, die Anweisung auszuführen, die in dem Speicher gespeichert ist, um den Sendeempfänger zu steuern, um das Verfahren nach Anspruch 11 durchzuführen.

14. Lesbares Speichermedium, wobei das lesbare Speichermedium ein Programm speichert, und wobei, wenn das Programm ausgeführt wird, das Verfahren nach einem der Ansprüche 1 bis 12 durchgeführt wird.

## Revendications

1. Procédé pour obtenir une ressource de planification de liaison descendante par un dispositif terminal, dans lequel le procédé comprend :

la réception (S110) d'une première information d'indication de préplanification envoyée par un dispositif de réseau, dans lequel la première information d'indication de préplanification est utilisée pour ordonner au dispositif terminal de recevoir un premier canal de données de liaison descendante ;
la réception (S120), selon la première information d'indication de préplanification, d'un signal de liaison descendante envoyé par le dispositif de réseau, dans lequel le signal de liaison descendante envoyé par le dispositif de réseau comprend le premier canal de données de liaison descendante ; et
la détection (S130) d'au moins un élément d'information d'indication de postplanification dans le signal de liaison descendante envoyé par le dispositif de réseau, dans lequel l'au moins un élément d'information d'indication de postplanification est utilisé par le dispositif terminal pour déterminer une ressource occupée par le premier canal de données de liaison descendante dans le signal de liaison descendante reçu ;
dans lequel l'au moins un élément d'information d'indication de postplanification comprend une première information d'indication de postplanification correspondant à la première information d'indication de préplanification ;
la première information d'indication de postplanification est utilisée pour indiquer une ressource occupée, dans une première période de temps, par le premier canal de données de liaison descendante dans le signal de liaison descendante reçu par le dispositif terminal, la première période de temps est une période de temps à partir d'un moment où le dispositif terminal reçoit le signal de liaison descendante envoyé par le dispositif de réseau jusqu'à un moment où le dispositif terminal réussit à détecter le première information d'indication de postplanification, et

la première information d'indication de postplanification est en outre utilisée pour indiquer que la transmission du premier canal de données de liaison descendante est achevée.

2. Procédé selon la revendication 1, dans lequel le procédé comprend en outre :

la réception d'une signalisation de couche supérieure, dans lequel la signalisation de couche supérieure comprend une première période pour détecter une information d'indication de préplanification et/ou une seconde période pour détecter une information d'indication de postplanification ; et
la réception (S110) d'une première information d'indication de préplanification envoyée par un dispositif de réseau comprend : la réception, par la détection d'une information d'indication de préplanification sur la base de la première période, de la première information d'indication de préplanification envoyée par le dispositif de réseau ; et/ou la détection (S130) d'au moins un élément d'information d'indication de postplanification dans le signal de liaison descendante envoyé par le dispositif de réseau comprend : la détection de l'au moins un élément d'information d'indication de postplanification sur la base de la seconde période,
en particulier dans lequel
la signalisation de couche supérieure comprend en outre une unité de planification de domaine temporel utilisée pour la planification de ressources.

3. Procédé selon la revendication 1, dans lequel la première information d'indication de postplanification comprend N éléments d'information d'indication d'occupation, les N éléments d'information d'indication d'occupation sont dans une correspondance individualisée avec N unités de domaine temporel occupées par le signal de liaison descendante reçu par le dispositif terminal, et chaque élément d'information d'indication d'occupation est utilisé pour indiquer si oui ou non une unité de domaine temporel correspondante est utilisée pour transmettre le premier canal de données de liaison descendante.

4. Procédé selon la revendication 1 ou 3, dans lequel l'information d'indication de préplanification est en outre utilisée pour indiquer un emplacement de détection de démarrage au niveau duquel le dispositif terminal détecte la première information d'indication de postplanification.

5. Procédé selon la revendication 1 ou 2, dans lequel un $j^{ème}$ élément d'information d'indication de postplanification dans l'au moins un élément d'information d'indication de postplanification est situé au niveau d'un emplacement prédéfini d'une $(j + 1)^{ème}$ unité de planification de domaine temporel occupée par le signal de liaison descendante reçu par le dispositif terminal, et le $j^{ème}$ élément d'information d'indication de postplanification est utilisé par le dispositif terminal pour déterminer une ressource occupée, dans une $j^{ème}$ unité de planification de domaine temporel, par le premier canal de données de liaison descendante dans le signal de liaison descendante reçu, dans lequel $j \geq 1$.

6. Procédé selon la revendication 5, dans lequel l'au moins un élément d'information d'indication de postplanification comprend une première information d'indication de postplanification correspondant à la première information d'indication de préplanification, et la première information d'indication de postplanification est utilisée pour indiquer que la transmission du premier canal de données de liaison descendante est achevée ; et
la première information d'indication de postplanification est un dernier élément d'information d'indication de postplanification dans l'au moins un élément d'information d'indication de postplanification.

7. Procédé selon la revendication 5, dans lequel la première information d'indication de préplanification est utilisée pour indiquer une taille d'une ressource attribuée par le dispositif de réseau au premier canal de données de liaison descendante ; et
le procédé comprend en outre :

la détermination, sur la base de la taille de ressource indiquée par la première information d'indication de préplanification et d'une taille de la ressource qui est occupée par le premier canal de données de liaison descendante et qui est déterminée par le dispositif terminal selon l'au moins un élément d'information d'indication de postplanification, si oui ou non la transmission du premier canal de données de liaison descendante est achevée ; et
lorsqu'il est déterminé que la transmission du premier canal de données de liaison descendante n'est pas achevée, la poursuite de la détection d'information d'indication de postplanification.

8. Procédé selon l'une quelconque des revendications 5 à 7, dans lequel le $j^{ème}$ élément d'information d'indication de postplanification comprend M éléments d'information d'indication d'occupation, les M éléments d'information d'indication d'occupation sont dans une correspondance individualisée avec M unités de domaine temporel contenues dans la j<sup>ème</sup> unité de planification de domaine temporel, et chaque élément d'information d'indication d'occupation est utilisé par le dispositif terminal pour déterminer si oui ou non une unité de domaine temporel correspondante est utilisée pour transmettre le premier canal de données de liaison descendante.

9. Procédé selon l'une quelconque des revendications 1 à 8, dans lequel le procédé comprend en outre :
la détection d'une seconde information d'indication de préplanification dans le signal de liaison descendante envoyé par le dispositif de réseau, dans lequel la seconde information d'indication de préplanification est utilisée pour ordonner au dispositif terminal de recevoir un second canal de données de liaison descendante.

10. Procédé selon l'une quelconque des revendications 1 à 9, dans lequel l'information d'indication de postplanification qui est dans l'au moins un élément d'information d'indication de postplanification et qui est utilisée par le dispositif terminal pour déterminer que la transmission des données de liaison descendante est achevée est utilisée pour ordonner au dispositif terminal d'envoyer une ressource de demande de répétition automatique hybride HARQ.

11. Procédé pour planifier une ressource de liaison descendante par un dispositif de réseau, dans lequel le procédé comprend :

l'envoi (S110) de la première information d'indication de préplanification à un dispositif terminal, dans lequel la première information d'indication de préplanification est utilisée pour ordonner au dispositif terminal de recevoir un premier canal de données de liaison descendante ; et
l'envoi (S120) d'un signal de liaison descendante au dispositif terminal, dans lequel le signal de liaison descendante comprend le premier canal de données de liaison descendante et au moins un élément d'information d'indication de postplanification, et l'au moins un élément d'information d'indication de postplanification est utilisé par le dispositif terminal pour déterminer une ressource occupée par le premier canal de données de liaison descendante dans le signal de liaison descendante reçu ;
dans lequel l'au moins un élément d'information d'indication de postplanification comprend une première information d'indication de postplanification correspondant à la première information d'indication de préplanification ;
la première information d'indication de postplanification est utilisée pour indiquer une ressource occupée, dans une première période de temps, par le premier canal de données de liaison descendante dans le signal de liaison descendante envoyé par le dispositif de réseau, la première période de temps est une période de temps à partir d'un moment où le dispositif de réseau envoie le signal de liaison descendante jusqu'à un moment où le dispositif de réseau envoie la première information d'indication de postplanification, et
la première information d'indication de postplanification est en outre utilisée pour indiquer que la transmission du premier canal de données de liaison descendante est achevée.

12. Dispositif terminal, dans lequel le dispositif terminal comprend :
un émetteur-récepteur, une mémoire et un processeur, dans lequel la mémoire est configurée pour stocker une instruction, et le processeur est configuré pour exécuter l'instruction stockée dans la mémoire, pour commander l'émetteur-récepteur pour qu'il mette en œuvre le procédé selon l'une quelconque des revendications 1 à 10.

13. Dispositif de réseau, dans lequel le dispositif de réseau comprend :
un émetteur-récepteur, une mémoire et un processeur, dans lequel la mémoire est configurée pour stocker une instruction, et le processeur est configuré pour exécuter l'instruction stockée dans la mémoire, pour commander l'émetteur-récepteur pour qu'il mette en œuvre le procédé selon la revendication 11.

14. Support de stockage lisible, dans lequel le support de stockage lisible stocke un programme, et lorsque le programme est exécuté, le procédé selon l'une quelconque des revendications 1 à 12 est mis en œuvre.

FIG. 1

FIG. 2

FIG. 3A

| 4 | 5 | 6 | 7 | | | | | | | | |

eMBB data (time domain unit #6)

First post-scheduling indication information

CONT. FROM FIG. 3A

1-ms subframe #(j+2)

FIG. 3B

FIG. 4A

CONT.
FROM
FIG. 4A

| 3 | 4 | 5 | 6 | 7 | | | | | | | |
|---|---|---|---|---|---|---|---|---|---|---|---|
| eMBB data (time domain unit #5) | eMBB data (time domain unit #6) | | | | Post-scheduling indication information | | | | | | |

1-ms subframe #(j+2)

FIG. 4B

200

Network device

Terminal device

S210. Determine to indicate a time domain resource by using a target indication mode

S230. Target indication mode

S220. Determine to detect scheduling indication information by using a target detection mode corresponding to the target indication mode

FIG. 5

Terminal device 300

Receiving module 310

Processing module 320

FIG. 6

Terminal device 400

Transceiver
410

Memory
420

440

Processor
430

FIG. 7

Network device 500

Sending module 510

FIG. 8

Network device 600

Transceiver
610

Memory
620

640

Processor
630

FIG. 9

**EP 3 506 700 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016234857 A1